# EUROPÄISCHE PATENTSCHRIFT

(11) **EP 1 284 427 B1**
(45) Veröffentlichungstag und Bekanntmachung des Hinweises auf die Patenterteilung: **19.06.2013**
(21) Anmeldenummer: 02015892.9
(22) Anmeldetag: 17.07.2002
(51) Int. Cl.: G02B 6/35

(54) **Lichtoptische Kontrolleinrichtung**
Light optical control device
Dispositif de contrôle de la lumière

(30) Priorität: 16.08.2001 DE 10141161
(43) Veröffentlichungstag der Anmeldung: 19.02.2003
(73) Patentinhaber: C. & E. Fein GmbH, 73529 Schwäbisch-Gmünd-Bargau (DE)
(72) Erfinder: Rudolf, Boris, 70192 Stuttgart (DE); Braun, Sigmund, 72127 Kunsterdingen (DE); Kress, Christof, 73779 Deizisau (DE)
(74) Vertreter: Gahlert, Stefan

(56) Entgegenhaltungen:
- EP-A- 0 126 253
- DE-A- 3 304 794
- DE-A- 4 309 049
- DE-A1- 4 027 135
- DE-U- 7 129 942

## Beschreibung

Die Erfindung betrifft ein Elektrowerkzeug mit einer lichtoptischen Kontrolleinrichtung, insbesondere einer Schalteinrichtung, Regeleinrichtung oder Sensoreinrichtung.

Bei Elektrowerkzeugen werden vielfältige Schalter und Regler eingesetzt, die in der Regel als Taster, als Drucktaster, als Schiebeschalter, als Kippschalter oder dergleichen ausgebildet sind.

Aus der DE 43 09 049 A ist ein optisches Schaltelement gemäß dem Oberbegriff von Anspruch 1 bekannt, das aus einer Lichtquelle sowie einem photoelektrischen Wandlerelement, einer Lichtleiteranordnung und einem Kopplungselement besteht. Die Lichtquelle und das photoelektrische Wandlerelement sind auf einer Leiterplatte gemeinsam mit elektronischen Bauteilen angeordnet. Mittels der Lichtleiteranordnung ist die Lichtquelle mit dem photoelektrischen Wandlerelement optisch verbindbar. Das Kopplungselement dient zur schaltbaren Beeinflussung des über die Lichtleiteranordnung übertragenen Lichtes. Ein derartiges optisches Schaltelement kann u.a. in Werkzeugmaschinen und bei Haushaltsgeräten eingesetzt werden.

Wie ein derartiger optischer Schalter in ein Elektrowerkzeug integriert werden kann, ist hieraus jedoch nicht entnehmbar.

Aus der DE 40 27 135 A1 ist ein Handwerkzeug mit Drehzahlregelung bekannt, das zwei Tastflächen am Gehäuse aufweist, über die eine Drehzahlerhöhung oder -erniedrigung bei Betätigung erfolgt, indem eine metallische Senderfläche aktiviert wird. Infolge des elektrischen Aufbaus müssen hierbei jedoch entsprechende Isolierungsmaßnahmen getroffen werden, wenn die Tastflächen an bestimmten ergonomisch günstigen Bereichen des Gehäuses vorgesehen werden sollen.

Der Erfindung liegt somit die Aufgabe zugrunde, ein Elektrowerkzeug zu schaffen, das mit einer Kontrolleinrichtung versehen ist, die insbesondere als Schalteinrichtung, Regeleinrichtung oder Sensoreinrichtung ausgebildet sein kann, womit sich eine möglichst ergonomische Bedienung ergibt und gleichzeitig eine möglichst dauerhafte und zuverlässige Ausführung gewährleistet ist.

Die Aufgabe der Erfindung wird durch ein Elektrowerkzeug gemäß Anspruch 1 gelöst.

Da das Kontrollorgan von einer elastischen Tastfläche überdeckt ist, ergibt sich eine besonders ergonomische Bedienung der Kontrolleinrichtung. Auch lässt sich die Kontrolleinrichtung an den verschiedensten Positionen im Gehäuse unterbringen, so dass sich eine vorteilhafte Nutzungsmöglichkeit ergibt.

Durch die Verbindung der elastischen Tstfläche mit dem Gehäuse in 2K-Technik ("2-Komponenten-Spritztechnik") läßt sich eine innige Verbindung eines weicheren elastischen Materials mit einem anderen Kunststoffmaterial herstellen. So kann bspw. eine Gummi- oder Silikon-Tastfläche mit dem übrigen (harten) Gehäuseteil fest verbunden hergestellt werden. Auf diese Weise wird eine zusätzliche Abdichtung der Tastfläche bzw. der Kontrolleinrichtung gegen Umwelteinflüsse von außen oder auch gegen Verschmutzung von innen erreicht.

Da die Tastfläche elastisch ausgebildet ist, kann das Kontrollorgan durch die Tastfläche hindurch bedient werden. Sofern gewünscht, kann dabei gleichzeitig die Elastizität der Tastfläche zur Erzeugung einer Rückstellkraft für das Kontrollorgan ausgenutzt werden. Hierdurch läßt sich die Kontrolleinrichtung relativ dünn mit entsprechend geringem Platzbedarf gestalten.

Die Kontrolleinrichtung gemäß der Erfindung läßt sich in vielfältiger Form abwandeln und so für die unterschiedlichsten Einsatzzwecke, insbesondere bei Elektrowerkzeugen verwenden.

Sofern die Auswerteschaltung nicht nur zwischen zwei Zuständen unterscheidet und die Intensität der in den Empfangsleiter eingekoppelten Lichtsignale ausgewertet wird, läßt sich die Kontrolleinrichtung auch als Regeleinrichtung realisieren.

Es versteht sich, daß die Bezeichnung "Lichtwellenleiter" nicht einschränkend dahingehend auszulegen ist, daß dies nur als Leiter für sichtbares Licht aufzufassen ist. Vielmehr wird im Rahmen dieser Anmeldung unter "Lichtwellenleiter" jeglicher Leiter verstanden, der zum Transport von elektromagnetischer Strahlung im Bereich sichtbaren Lichtes, im Infrarotbereich, im UV-Bereich oder angrenzenden Bereichen geeignet ist.

In vorteilhafter Weiterbildung der Erfindung sind der Sendeleiter und der Empfangsleiter zumindest im Bereich des Kontrollorgans in einer nach außen zumindest staubgeschützten Einheit aufgenommen.

Auf diese Weise läßt sich die Kontrolleinrichtung auch unter den rauhen Arbeitsbedingungen einsetzen, denen Elektrowerkzeuge häufig ausgesetzt sind.

Gemäß einer weiteren Ausführung der Erfindung ist der Sendeleiter an einem ersten Ende mit der Lichtquelle verbunden, während der Empfangsleiter an einem ersten Ende mit der Auswerteschaltung verbunden ist, wobei ein zweites Ende des Sendeleiters von einem zweiten Ende des Empfangsleiters beabstandet angeordnet ist.

Über das Kontrollorgan läßt sich nunmehr die Einkopplung der vom Sendeleiter ausgesandten Lichtsignale in das zweite Ende des Empfangsleiters in vielfältiger Weise beeinflussen.

Auf diese Weise lassen sich sowohl lichtoptische Schalter mit verschiedenen definierten Schaltstellungen realisieren, als auch Taster, Schiebeschalter und Drehschalter.

Gemäß einer Weiterbildung der vorstehend genannten Ausführung ist die Kontrolleinrichtung als elastisches Formteil ausgebildet, das die zweiten Enden der Lichtwellenleiter umschließt.

Dies hat den Vorteil, daß das Kontrollorgan selbst als auch gleichzeitig die zweiten Enden der Lichtwellenleiter sehr robust und zuverlässig gegen Umwelteinflüsse geschützt sind. Das Kontrollorgan kann nämlich bspw. als Gummiteil ausgebildet sein.

Hierbei ist das elastische Formteil bevorzugt als Hülse ausgebildet, die im Bereich zwischen den zweiten Enden zur Unterbrechung von in den Empfangsleiter eingekoppelten Lichtsignalen elastisch deformierbar ist. Hierzu kann eine Verdickung im Bereich zwischen den zweiten Enden vorgesehen sein.

Hierdurch wird eine besonders einfach aufgebaute und robuste Kontrolleinrichtung realisiert.

Gemäß einer weiteren Ausgestaltung der Erfindung sind die zweiten Enden der Lichtwellenleiter zur Übertragung eines Lichtsignals in den Empfangsleiter miteinander ausgerichtet, wobei das Kontrollorgan eine Relativbewegung der beiden Enden zueinander erlaubt.

Auch mit einer derartigen Ausführung läßt sich auf besonders einfache Weise eine Schalteinrichtung, Regeleinrichtung oder Sensoreinrichtung realisieren.

Gemäß einer weiteren Ausführung der Erfindung sind die zweiten Enden der Lichtwellenleiter zur Einkopplung von Lichtsignalen in den Empfangsleiter miteinander ausgerichtet, wobei das Kontrollorgan einen in den Raum zwischen den beiden Enden hineinbewegbaren Abschnitt umfaßt.

Gemäß einer Weiterbildung dieser Ausführung ist das Kontrollorgan als Federelement ausgebildet, in dessen Innenraum zwischen den zweiten Enden hinein bewegbaren Abschnitt eine Lichtdurchlaßöffnung vorgesehen ist.

Bei einer derartigen Ausgestaltung läßt sich auf besonders einfache Weise ein Taster realisieren, da die Rückstellkraft unmittelbar durch das Federelement erzeugt werden kann.

Gemäß einer weiteren Ausgestaltung der Erfindung ist das Kontrollorgan als Schieber ausgebildet, der zwischen einer Ruheposition, in der die zweiten Enden der Lichtwellenleiter nicht miteinander fluchten, und einer Arbeitsposition, in der die zweiten Enden zur Einkopplung von Lichtsignalen in den Empfangsleiter miteinander ausgerichtet sind, verschiebbar ist.

Somit läßt sich auf einfache Weise ein lichtoptischer Schiebeschalter oder Tastschalter realisieren.

Hierbei ist der Schieber bevorzugt in einer Arbeitsposition verrastbar und in Richtung auf die Ruheposition vorgespannt.

Gemäß einer weiteren Ausführung der Erfindung ist zumindest eines der zweiten Enden durch ein Federelement oder seine Eigenspannung in einer Richtung etwa quer zu seiner Erstreckungsrichtung vorgespannt, wobei das Kontrollorgan eine seitliche Bewegung des zweiten Endes zwischen Ruheposition und Arbeitsposition erlaubt.

Hierdurch ist eine besonders einfache Ausführung gewährleistet.

In vorteilhafter Weiterbildung dieser Ausführung ist der Schieber von einer elastischen Tastfläche überdeckt, mit der er fest verbunden ist, wobei durch die Materialspannung der Tastfläche eine Vorspannung in Richtung auf die Ruheposition erzeugt werden kann, oder umgekehrt in Richtung auf die Arbeitsposition, sofern dies gewünscht ist.

Auf diese Weise läßt sich ein ergonomisch besonders günstiger Schiebeschalter realisieren, da durch eine Verrastung in der Arbeitsposition ein ermüdungsfreies Arbeiten mit geringem Kraftaufwand ermöglicht wird. Durch die Vorspannung in Richtung auf die Ruheposition wird der Schiebeschalter nach Loslassen wieder zurückgestellt.

Durch die Verbindung des Schiebers mit der darüber liegenden elastischen Tastfläche kann die Vorspannung in Richtung auf die Ruheposition auf besonders einfache Weise erzeugt werden, wobei gleichzeitig eine Kapselung der Kontrolleinrichtung gegen Umwelteinflüsse gewährleistet ist, da die Tastfläche bspw. aus Gummi, einem Silikonmaterial oder dergleichen bestehen kann.

Gemäß einer weiteren Ausführung der Erfindung ist das Kontrollorgan als Drehschieber ausgebildet, der mit einem der zweiten Enden der Lichtwellenleiter zur Bewegung desselben zwischen den beiden Positionen gekoppelt ist.

Auf diese Weise kann mit besonders einfachen Mitteln ein Drehschalter realisiert werden. Hierbei kann das Kontrollorgan zum Beispiel als Schaltring ausgebildet sein, der zwischen einer Ruheposition und einer Arbeitsposition verdrehbar ist.

Gemäß einer weiteren Ausführung der Erfindung sind die zweiten Enden der Lichtwellenleiter zueinander versetzt angeordnet, wobei das Kontrollorgan Mittel zur Einkopplung der vom Sendeleiter ausgesandten Lichtsignale zumindest in einer der Positionen des Kontrollorgans in den Empfangsleiter aufweist.

Mit einer derartigen Ausführung können weitere Anwendungserfordernisse an die Kontrolleinrichtung abgedeckt werden, insbesondere lassen sich ringförmige oder teilringförmige Kontrollorgane realisieren, die zwischen mehreren Schaltpositionen verdrehbar sind.

Die Mittel zur Einkopplung können bspw. ein Prisma, eine Reflexionsfläche oder ein anderes Umlenkelement aufweisen, das in eine Position zur Übertragung von Lichtsignalen vom Sendeleiter auf den Empfangsleiter bewegbar ist.

Ferner kann den zweiten Enden in einer Ruheposition ein weiteres Umlenkelement zugeordnet sein, das gleichfalls als Prisma ausgebildet sein kann, um vom Sendeleiter ausgesandte Lichtsignale auf eine optische Anzeige umzulenken.

Auf diese Weise können die vom Sendeleiter ausgesandten Lichtsignale dazu genutzt werden, die Ruheposition des Schalters optisch sichtbar zu machen.

Bei den vorstehend genannten Ausführungen kann das Kontrollorgan in vorteilhafter Weiterbildung einen Drehschieber umfassen, in dem die Mittel zur Einkopplung und/oder das Umlenkelement aufgenommen sind.

Hierbei kann der Drehschieber als Schaltring ausgebildet sein, der in Richtung auf eine Ruheposition vorgespannt ist.

Des weiteren kann der Schaltring in Richtung auf eine mittlere Ruhepositon elastisch vorgespannt sein, in der Lichtsignale vom Sendeleiter über das Umlenkelement auf eine Anzeigefläche zur optischen Anzeige der Ruheposition umgelenkt werden.

Ferner kann der Schaltring auch aus der Ruheposition in einer ersten Drehrichtung in eine erste Arbeitsposition bewegbar sein, in der Lichtsignale in den Empfangsleiter eingekoppelt werden, und in eine zweite Drehrichtung in eine zweite Arbeitsposition bewegbar sein, in der gleichfalls Lichtsignale in den Empfangsleiter eingekoppelt werden.

Auf diese Weise läßt sich ein Ringschalter realisieren, der eine mittlere Ruheposition aufweist, die optisch angezeigt wird, sowie zwei Arbeitspositionen, die durch Verdrehen in die eine oder in die andere Drehrichtung erreichbar sind.

Gemäß einer weiteren Ausführung der Erfindung weist der Drehschieber eine elastische Tastfläche auf, die umfangsseitig an einer Gehäuseöffnung aufgenommen ist, wobei die Mittel zur Einkopplung der Lichtstrahlen in den Empfangsleiter und/oder die Umlenkmittel an der elastischen Tastfläche aufgenommen sind.

Auf diese Weise kann ein Drehschiebeschalter besonders einfach realisiert werden.

Hierbei kann die Elastizität der Tastfläche dazu ausgenutzt werden, um das Kontrollorgan in Richtung auf eine Ruheposition elastisch vorzuspannen oder umgekehrt.

Wiederum kann die Tastfläche gleichzeitig dazu dienen, die Lichtwellenleiter und das Kontrollorgan gegen Umwelteinflüsse abzuschotten oder vollständig abzudichten.

Gemäß einer weiteren Ausgestaltung der Erfindung weisen die Mittel zur Einkopplung ein Spiegelelement auf, das in eine Position zur Übertragung von Lichtstrahlen vom Sendeleiter auf den Empfangsleiter bewegbar ist.

Hiermit lassen sich weitere Anforderungen an die Kontrolleinrichtung abdecken. Insbesondere läßt sich durch eine kontinuierliche Abtastung der vom Empfangsleiter aufgenommenen Lichtsignale eine Regeleinrichtung realisieren.

In vorteilhafter Weiterbildung dieser Ausführung weist das Spiegelelement ein Federelement auf, das an einem Ende eingespannt ist und an dessen anderen Ende eine Spiegelfläche aufgenommen ist, die entgegen der Wirkung der Federkraft bewegbar ist.

Auf diese Weise kann durch das Federelement gleichzeitig eine Rückstellkraft zur Vorspannung des Kontrollorgans etwa in eine Ruheposition erreicht werden.

Hierbei kann die Spiegelfläche zwischen einer Position, in der keine Lichtsignale in den Empfangsleiter eingekoppelt werden, und einer Position, in der aus dem Sendeleiter austretendes Licht weitgehend vollständig in den Empfangsleiter eingekoppelt wird, kontinuierlich verschwenkbar sein.

Auf diese Weise läßt sich eine kontinuierliche Abtastung der vom Empfangsleiter empfangenen Lichtsignale und somit eine kontinuierliche Regeleinrichtung realisieren.

Hierbei kann das Federelement an einer Tastfläche anliegen, mittels derer das Federelement betätigbar ist.

Auf diese Weise läßt sich ein Taster realisieren, der entweder zur Ein-Aus-Schaltung und/oder zur kontinuierlichen Regelung verwendbar ist, insbesondere bei einem Elektrowerkzeug mit einem Gehäuse in Pistolenform.

Gemäß einer weiteren Ausführung der Erfindung weist ein Elektrowerkzeug mindestens ein Betätigungs- oder Anbauteil auf, dem eine Kontrolleinrichtung der vorstehend genannten Art zugeordnet ist.

Auf diese Weise lassen sich vielfältige Schalt-, Steuer- oder Kontrollfunktionen in besonders vorteilhafter Weise realisieren.

Bspw. kann bei Elektrowerkzeugen, die einen Zusatzhandgriff, wie einen Stielhandgriff aufweisen, mittels der Kontrolleinrichtung überwacht werden, ob der Benutzer den Stielhandgriff ergriffen hat, um so einen Zweihandbetrieb (d.h. Aktivierung des Antriebs nur bei gleichzeitigem Ergreifen eines weiteren Griffteiles und Betätigen eines weiteren Schalters) zu gewährleisten. Auf diese Weise könnte bspw. ein Zweihand-Winkelschleifer realisiert werden. Des weiteren könnte mit einer derartigen Kontrolleinrichtung bspw. überwacht werden, ob sich ein bestimmtes Anbauteil am Elektrowerkzeug befindet oder nicht. So könnte bspw. ein Anlaufen eines Winkelschleifers vermieden werden, sofern die vorgeschriebene Haube nicht vorhanden ist.

Des weiteren kann überwacht werden, ob sich ein Betätigungsteil, z.B. ein Spannhebel in einer bestimmten vorgeschriebenen Position befindet. Schließlich können bestimmte Anbauteile oder Zubehörteile, die nur zur Verwendung mit einem bestimmten Elektrowerkzeug vorgesehen sind, mittels der Kontrolleinrichtung kodiert werden. So könnte bspw. sichergestellt werden, daß an einem bestimmten Winkelschleifer nur eine bestimmte Haube montiert ist, während in allen übrigen Fällen ein Anlaufen des Winkelschleifers durch die Kontrolleinrichtung ausgeschlossen wird.

Bei einem Elektrowerkzeug, das einen Spannhebel zum Spannen eines Werkzeuges aufweist, der zwischen einer Spannposition und einer Löseposition bewegbar ist, läßt sich eine Kontrolle dafür, ob sich der Spannhebel in der Spannposition befindet, durch eine dem Spannhebel zugeordnete Kontrolleinrichtung realisieren, wobei diese insbesondere derart ausgebildet ist, daß die beiden Enden der Lichtwellenleiter von einer elastischen Hülse umschlossen sind, die im Bereich zwischen den zweiten Enden eine Verdickung aufweist, die zur Unterbrechung von in den Empfangsleiter eingekoppelten Lichtsignalen elastische deformierbar ist.

Eine derartige Kontrolleinrichtung läßt sich in einfacher Weise in den Getriebekopf des Elektrowerkzeuges derart einsetzen, daß der Spannhebel die Kontrolleinrichtung in der Spannposition aktiviert.

Hierbei kann die Kontrolleinrichtung insbesondere als Schalter ausgebildet sein, der eine Motorbetätigung nur bei in der Spannposition befindlichem Spannhebel erlaubt.

Gemäß einer weiteren Ausführung der Erfindung ist mindestens einer der Lichtwellenleiter in die Gehäusewandung integriert. Hierbei kann es sich um eine Verlegung des Lichtwellenleiters unmittelbar in der Gehäusewandung, oder an der Außenseite oder der Innenseite der Gehäusewandung handeln.

In jedem Falle läßt sich auf diese Weise eine deutlich verringerte Baugröße des gesamten Elektrowerkzeuges realisieren.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine erste Ausführung einer erfindungsgemäßen Kontrolleinrichtung in vereinfachter Prinzipdarstellung;
- Fig. 1a: ein Elektrowerkzeug mit einer Kontrolleinrichtung gemäß Fig. 1, wobei lediglich der Getriebekopf des Elektrowerkzeuges in perspektivischer Ansicht dargestellt ist;
- Fig. 1b: eine Gesamtansicht des Elektrowerkzeuges gemäß Fig. 1a;
- Fig. 1c: eine Detailansicht eines Schalters gemäß Fig. 1b;
- Fig. 2: eine abgewandelte Ausführung der Kontrolleinrichtung gemäß Fig. 1, wobei lediglich die sich gegenüber liegenden Enden zweier Lichtwellenleiter und ein zu
- Fig. 3a)-d): eine weitere Ausführung einer Kontrolleinrichtung für ein Elektrowerkzeug als Schiebeschalter in stark vergrößerter, teilweise geschnittener Darstellung;
- Fig. 4: eine weitere Ausführung einer Kontrolleinrichtung mit einem Schaltring im Querschnitt, die nicht von der Erfindung umfasst ist;
- Fig. 4a: einen vergrößerten Ausschnitt aus dem Schaltring mit dem zugeordneten Profilschlauch gemäß Fig. 4;
- Fig. 4b: eine perspektivische Ansicht eines weiteren Elektrowerkzeuges mit drei Kontrolleinrichtungen;
- Fig. 5: eine Ansicht einer weiteren Ausführung einer nicht von der Erfindung umfassten Kontrolleinrichtung mit ringförmigen Lichtwellenleitern, bei denen der Lichteintritt in den Empfangsleiter an vier Stellen durch ein ringförmiges Kontrollorgan unterbrochen werden kann;
- Fig. 5a: einen Querschnitt durch die Kontrolleinrichtung gemäß Fig. 5;
- Fig. 6: eine weitere Ausführung einer nicht erfindungsgemäßen Kontrolleinrichtung mit einem ringförmigen Kontrollorgan in quergeschnittener Darstellung, in einer Ruheposition;
- Fig. 6a: die Kontrolleinrichtung gemäß Fig. 6 in einer Arbeitsposition;
- Fig. 7: eine weitere Ausführung einer nicht erfindungsgemäßen Kontrolleinrichtung in perspektivischer Ansicht;
- Fig. 7a: eine perspektivische Ansicht des Kontrollorgans gemäß Fig. 7;
- Fig. 7b: eine perspektivische Ansicht eines Metallrings zur Herstellung des Schaltrings gemäß Fig. 7a mit schematisch angedeuteten, eingesetzten Federelementen;
- Fig. 7c: einen vergrößerten Detailschnitt durch den Rand des Schaltrings gemäß Fig. 7 im Bereich einer Abdichtung zum Gehäuse;
- Fig. 8: eine weitere Ausführung einer Kontrolleinrichtung für ein erfindungsgemäßes Elektrowerkzeug, die in einen entsprechenden Ausschnitt eines Gehäuses einsetzbar ist, in perspektivischer Darstellung, von der Innenseite aus gesehen;
- Fig. 8a: die Kontrolleinrichtung gemäß Fig. 8 in einer aktivierten Position;
- Fig. 8b: ein erfindungsgemäßes Elektrowerkzeug mit zwei Kontrolleinrichtungen gemäß Fig. 8;
- Fig. 9: eine weitere Ausführung einer Kontrolleinrichtung für ein erfindungsgemäßes Elektrowerkzeug in stark vergrößerter, teilweise quergeschnittener Darstellung;
- Fig. 9a: eine Aufsicht auf die Kontrolleinrichtung gemäß Fig. 9 nach Abnahme der darüber liegenden elastischen Tastfläche;
- Fig. 9b: eine perspektivische Ansicht eines erfindungsgemäßen Elektrowerkzeuges in Pistolenform mit einer Kontrolleinrichtung gemäß Fig. 9;
- Fig. 10: eine Abwandlung der Kontrolleinrichtung für ein erfindungsgemäßes Elektrowerkzeug gemäß in Fig. 9 in schematischer, vergrößerter Darstellung, aus der insbesondere die zweiten Enden der Lichtwellenleiter und ein zugeordnetes Reflexionselement erkennbar sind;
- Fig. 10a: einen Schnitt durch die Kontrolleinrichtung gemäß Fig. 10 im Bereich der beweglichen Reflexionsfläche;
- Fig. 10b: eine vergrößerte Darstellung der Tastfläche gemäß Fig. 10a;
- Fig. 11: eine schematische Darstellung einer nicht von der Erfindung umfassten alternativen Ausführung der Kontrolleinrichtung und
- Fig. 12: eine weitere nicht von der Erfindung umfassten Abwandlung der Ausführung gemäß Fig. 11 in schematischer Darstellung.

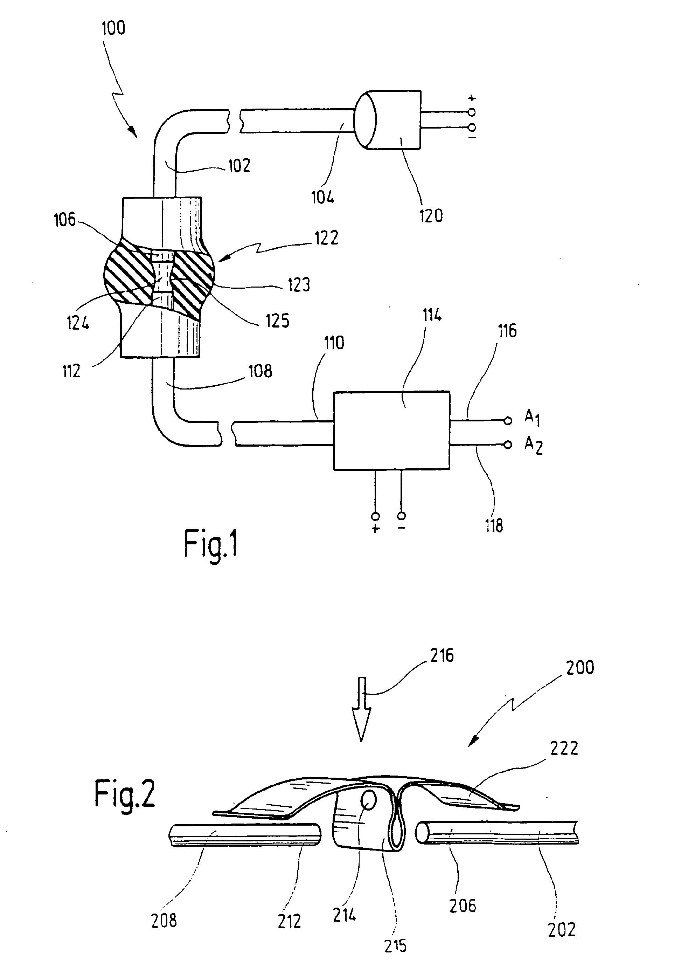

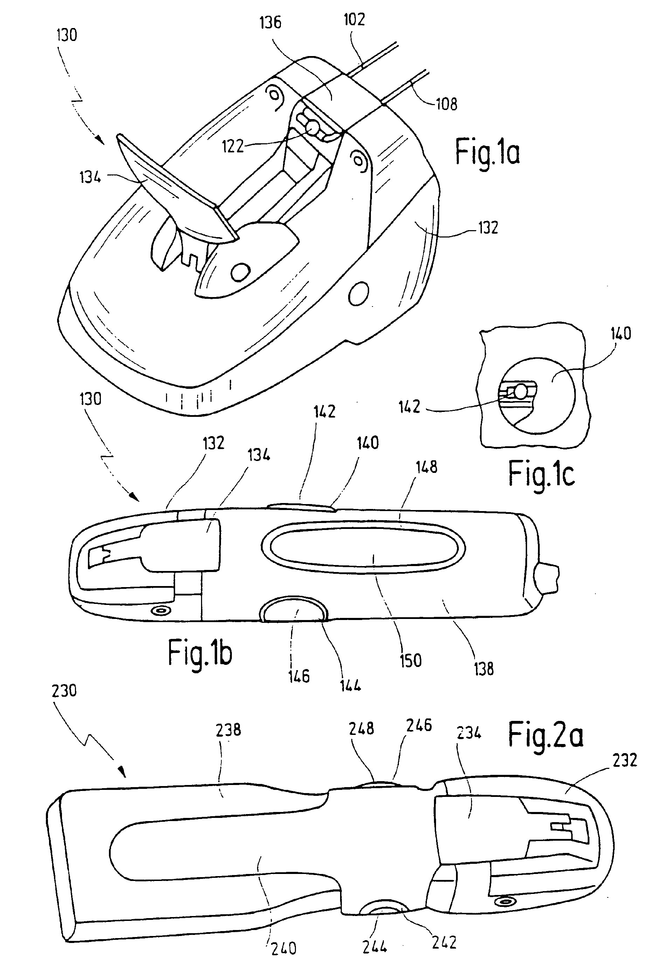

In Fig. 1 ist eine erste Ausführung einer Kontrolleinrichtung für ein erfindungsgemäßes Elektrowerkzeug insgesamt mit der Ziffer 100 bezeichnet.

Die Kontrolleinrichtung 100 umfaßt einen ersten Lichtwellenleiter 102, der als Sendeleiter ausgebildet ist, und einen zweiten Lichtwellenleiter 108, der als Empfangsleiter ausgebildet ist. Der Sendeleiter 102 weist ein erstes Ende 104 auf, in das von einer Lichtquelle 120, die bspw. als LED ausgeführt sein kann, Licht einspeisbar ist.

Ein zweites Ende 106 des Sendeleiters 102 ist mit geringem Abstand von einem zugeordneten zweiten Ende 112 des Empfangsleiters 108 angeordnet. Das erste Ende 110 des Empfangsleiters 108 steht mit einer Auswerteschaltung 114 in Verbindung, in der die vom Empfangsleiter 108 erhaltenen Lichtsignale elektronisch ausgewertet werden, um in Abhängigkeit davon an einem Ausgang 116, 118 Ausgangssignale A₁, A₂ auszugeben.

Die zweiten Enden 106, 112 der Lichtwellenleiter 102, 108 sind von einem Kontrollorgan 122 umschlossen, das in der dargestellten Ausführung als Gummihülse ausgeführt ist, die die zweiten

Enden 106, 112 fest umschließt und in der Mitte einen umlaufenden Wulst 123 besitzt. Im Bereich zwischen den zweiten Enden 106, 112 ist in Fig. 1 ein Lichtstrahl 124 angedeutet, der vom Sendeleiter 102 in den Empfangsleiter 108 übertritt. Im Bereich zwischen den zweiten Enden 106, 112 weist die Gummihülse ferner eine in Richtung auf den Lichtstrahl 124 hervorstehende Verdikkung oder Innensicke 125 auf. Da das Kontrollorgan 122 oder die Hülse gummielastisch ist, kann der Wulst 123 von außen ergriffen und zusammengedrückt werden, so daß der Lichtstrahl 124 unterbrochen wird. Dies wird von der Auswerteschaltung 114 registriert, die an ihren Ausgängen 116, 118 eine zugeordnete Ausgangsspannung ausgibt. Sofern die Kontrolleinrichtung 100 als Schalter ausgebildet sein soll, so kann die Auswerteschaltung 114 ein Relais oder einen Halbleiterschalter enthalten, das die Ausgänge 116, 118 dann, wenn die vom Empfangsleiter 108 erhaltenen Lichtsignale eine bestimmte Intensität unterschreiten, öffnet (oder schließt).

Grundsätzlich ist es natürlich auch möglich, mit der Auswerteschaltung 114 eine kontinuierliche Auswertung der Intensität der erhaltenen Lichtsignale vorzunehmen, um in Abhängigkeit davon ein kontinuierliches Ausgangssignal oder ein digitales Ausgangssignal auszugeben, das ein Regelsignal sein kann.

Fig. 1a zeigt eine Anwendung der Kontrolleinrichtung 100 gemäß Fig. 1 als Sensor, mit dem die Lage eines Spannhebels 134 eines Elektrowerkzeuges 130 überwacht wird.

Das Elektrowerkzeug 130 ist in Fig. 1a lediglich im Bereich seines Getriebekopfes 132 dargestellt. Zum Spannen eines Werkzeuges weist das Elektrowerkzeug 130 den Spannhebel 134 auf. Der Spannhebel 134 läßt sich zwischen der in Fig. 1a dargestellten Offenposition und einer Schließposition verschwenken, in der der Spannhebel 134 an der Oberfläche des Getriebekopfes 132 anliegt. Im Auflagebereich des Spannhebels 134 ist eine Kontrolleinrichtung 100 gemäß Fig. 1 angeordnet. Die beiden Lichtwellenleiter 102, 108 sind mittels eines Kunststoffteils 136 an der Oberseite des Getriebekopfes 132 durch einklipsen in einer geeigneten Lage befestigt, so daß das Kontrollorgan 122 im Auflagebereich des Spannhebels 134 liegt.

Die Lichtwellenleiter 102, 108 sind vorzugsweise als flexible Lichtwellenleiter ausgeführt und lassen sich durch punktuelles Erhitzen so bleibend verformen, daß gewünschte Biegungen erzeugt werden können. Bspw. bei 2,2 mm starken Leitungen läßt sich eine Biegung von 90° mit einem Biegeradius von einem Millimeter erzeugen. Dabei wird die Lichtdurchlässigkeit kaum beeinträchtigt. Wichtig für eine gute Lichtübertragung ist ein möglichst geringer Abstand der zweiten Enden.

Bei geschlossenem Spannhebel 134 wird das Kontrollorgan 122 zusammengedrückt und der Lichtstrahl 124 unterbrochen, was von der Auswerteschaltung 114 registriert wird.

Fig. 1b zeigt eine Gesamtansicht des Elektrowerkzeuges 130.

Das Elektrowerkzeug weist neben der Kontrolleinrichtung zur Lagekontrolle des Spannhebels 134 weitere drei Kontrolleinrichtungen der Ausführung gemäß Fig. 1 auf, die an seinem stabförmigen Gehäuse 138 aufgenommen sind.

Im dargestellten Fall handelt es sich bei dem Elektrowerkzeug 130 um einen Winkelschleifer, der für Einhandbetrieb ausgelegt ist.

In der Mitte des Gehäuses 138 befindet sich eine längliche Tastfläche 148, über die eine darunter liegende Kontrolleinrichtung in Form eines Schalters 150 betätigbar ist. Der Schalter 150 läßt sich durch den Handballen betätigen. Er dient als Hauptschalter für den Motor des Elektrowerkzeuges (Totmannschaltung). Wenn die Maschine mit der Hand im Bereich der Tastfläche 148 umgriffen wird, ist die Maschine startbereit. Dabei muß sich ferner der Spannhebel 134 in der Schließposition befinden, so daß der Lichtstrahl unterbrochen wird, was von dem optischen Taster registriert wird.

Ein Ein-/Ausschalten der Maschine ist nun über zwei Fingertaster 142, 146 im vorderen Bereich der beiden Seitenflächen des Gehäuses 138 möglich. Sie schalten jeweils einen optischen Taster, wobei zum Betreiben des Elektrowerkzeuges 130 nur einer der beiden Taster 142, 146 gedrückt werden muß. Diese Taster 142, 146 sind von einer Tastfläche 140 bzw. 144 aus Gummi abgedeckt. Die Taster 142, 146 und die zugehörigen Tastflächen 140, 144 sind sehr weich ausgelegt, so daß sie während des Betriebs der Maschine dauernd gedrückt werden können.

Auf diese Weise ergibt sich eine sehr ergonomische Gestaltung des Elektrowerkzeuges 130, das sowohl für Rechtshänderbetrieb, als auch für Linkshänderbetrieb ausgelegt ist, wobei gleichzeitig eine Lagekontrolle des Spannhebels 134 gewährleistet ist.

Die Lichtwellenleiter können unterhalb der Tastflächen an der Außenseite des Gehäuses 138 verlegt sein, wie am Beispiel der Tastfläche 140 dargestellt ist (Fig. 1c). Wird das Gehäuse 138 aus zwei Halbschalen zusammengesetzt, so ergibt sich eine vereinfachte Montage durch Einlegen sämtlicher Bauteile in eine Gehäuseschale. Die Gummischaltflächen für die Fingertaster lassen sich in der dargestellten Weise in das Gehäuse integrieren. Dabei besteht gleichzeitig eine Geräuschdämpfung durch gummierte Innenwände, während örtlich gummierte Außenflächen einen verbesserten Griffkomfort erlauben und eine Vibrationsdämpfung gewährleisten.

Durch die lichtoptische Kontrolleinrichtung 100 im Bereich des Getriebekopfes 132, der aus Metall besteht, wird dabei eine Lagekontrolle des Spannhebels 134 auf besonders einfache Weise realisiert, ohne daß aufwendige Isolierungsmaßnahmen wegen des Berührungsschutzes im Bereich des metallischen Getriebekopfes notwendig sind.

Eine Abwandlung der Kontrolleinrichtung 100 ist in Fig. 2 schematisch dargestellt und insgesamt mit der Ziffer 200 bezeichnet. Aus Vereinfachungsgründen sind der Sendeleiter 202 und der Empfangsleiter 208 lediglich im Bereich ihrer zweiten Enden 206, 212 dargestellt. Das zugeordnete Kontrollorgan 222 ist als Formfeder mit zwei seitlichen Flügeln und einem mittleren, von den Flügeln aus nach unten hervorstehenden Abschnitt 215 ausgebildet, der in einer Ruheposition in dem Bereich zwischen den zweiten Enden 206, 212 hineinragt und somit einen Lichtstrahl unterbricht. Im oberen Bereich des Abschnittes 215 des Kontrollorgans 222 ist an einer geeigneten Position eine Lichtdurchlaßöffnung 214 vorgesehen, die bei Niederdrücken des Kontrollorgans 222 in Richtung des Pfeiles 216 zwischen die zweiten Enden 206, 212 gelangt und somit den Lichtstrahl durchläßt.

Bei Fig. 2 wurde, wie auch bei den nachfolgenden Figuren, auf die Darstellung der übrigen Teile der Kontrolleinrichtung, wie Lichtquelle und Auswerteschaltung, der Einfachheit halber verzichtet.

Die Ausführung gemäß Fig. 2 läßt sich vorteilhaft als Taster einsetzen, wobei die Rückstellung durch die Federkraft des Kontrollorgans 222 oder Federelementes erreicht wird.

Grundsätzlich könnte natürlich auch in der Ruheposition ein Durchlaß des Lichtstrahles erfolgen und bei niedergedrückter Feder der Lichtdurchlaß unterbrochen sein.

Ein Elektrowerkzeug in Form eines Winkelschleifers unter Verwendung einer derartigen Kontrolleinrichtung 200 ist in Fig. 2a dargestellt und insgesamt mit der Ziffer 230 bezeichnet.

Am Gehäuse 238 des Elektrowerkzeuges 230 sind zwei einander gegenüber liegende Taster 244, 248 vorgesehen, die jeweils durch Tastflächen 242, 246 überdeckt sind. Am werkzeugseitigen Ende des Elektrowerkzeuges 230 ist ein Getriebekopf 232 aus Metall vorgesehen, an dem ein Spannhebel 234 verschwenkbar festgelegt ist, wobei wiederum ein Taster (nicht dargestellt) vorgesehen ist, um die Schließstellung des Spannhebels 234 zu überwachen. Sämtliche Lichtwellenleiter sind auf der Außenseite des Motorgehäuses unterhalb einer Gummifläche 240 verlegt. Damit liegen die Leitungen nicht im Luftstrom, so daß keine Gefährdung durch zu hohe Temperaturen auftritt. Im Gehäuse 238 kann eine entsprechende Vertiefung für die Lichtwellenleiter vorgesehen sein, so daß die Gummifläche 240, die auch die Tastfläche 242, 246 mit einschließt, bündig am Gehäuse 238 eingelassen werden kann. Die Lichtleiter können auch in der Gehäusewandung oder an der Innenseite der Gehäusewand verlegt sein, wodurch mehr Platz für den Kühlluftstrom zur Verfügung steht.

Zusätzlich kann ein dritter Taster auf der der Gummifläche 240 gegenüber liegenden Fläche am Ende des Gehäuses 238 vorgesehen sein, der zum Einschalten des Gerätes bei Zweihandbetrieb vorgesehen ist. Zum Einschalten des Elektrowerkzetiges 230 muß wahlweise lediglich einer der Taster 244, 248 oder des dritten (nicht dargestellten) Tasters gedrückt werden. Die Taster lassen im gedrückten Zustand ein Lichtsignal durch. Dadurch wird ein Anlaufen des Elektrowerkzeuges 230 im Störfall unterbunden, wenn die Signalstrecke unterbrochen ist.

Zusätzlich muß, um ein Anlaufen des Elektrowerkzeuges 230 zu ermöglichen, der Taster zur Überwachung des Spannhebels 234 aktiviert sein.

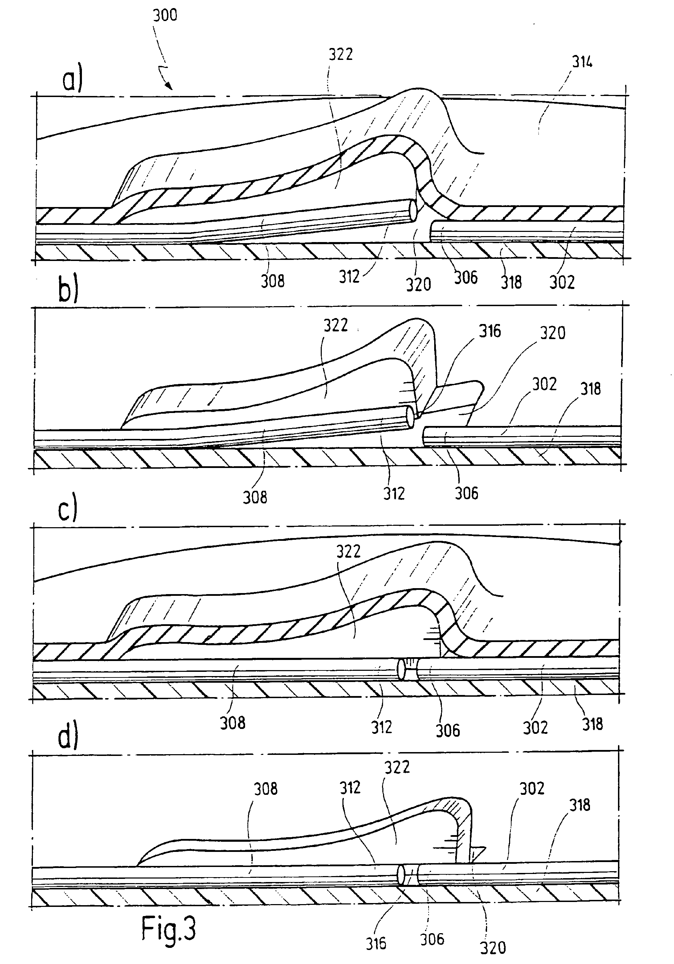

In den Figuren 3a bis 3d ist eine weitere Abwandlung der Kontrolleinrichtung für ein erfindungsgemäßes Elektrowerkzeug insgesamt mit der Ziffer 300 bezeichnet.

Hierbei handelt es sich um einen sogenannten Schiebeschalter, der aus einer Ruheposition, die in den Figuren 3a) und b) dargestellt ist, in eine Arbeitsposition, die in den Figuren 3c) und d) dargestellt ist, verschiebbar ist. Fig. 3a) und 3c) sind mit Tastflächen dargestellt, während bei Fig. 3b) und 3d) auf die Darstellung der Tastflächen verzichtet wurde.

Hierzu ist ein Sendeleiter 302 mit seinem zweiten Ende 306 fest im Gehäuse 318 aufgenommen. Dem Sendeleiter 302 ist ein Empfangsleiter 308 zugeordnet, der mit dem Sendeleiter 306 ausgerichtet ist, wobei das zweite Ende 312 des Empfangsleiters 308 jedoch mittels des Kontrollorgans 322, das als Schieber ausgebildet ist, seitlich auslenkbar ist, um die Übertragung von Lichtsignalen in dem Empfangsleiter 308 unterbrechen zu können. Der flexibel ausgebildete Empfangsleiter 308 kann nach oben in Richtung auf den Schieber 322 aufgrund seiner Eigenspannung elastisch vorgespannt sein oder durch ein Federelement vorgespannt werden.

Der Schieber 322 weist eine längliche, annähernd keilförmige Form auf und besitzt an seinem dem Sendeleiter 302 zugewandten Ende eine nach unten hervorstehende Rastfläche 316, die in einer entsprechend geformten Vertiefung 320 des Gehäuses 318 zur Verrastung aufnehmbar ist. Der Schieber 322 ist mit einer darüber liegenden Tastfläche 314, die aus einer Gummimatte be-steht, fest verbunden, was bspw. durch Herstellung in Zwei-Komponenten-Spritztechnik erfolgen kann. Beim Schalten, d.h. bei Bewegung aus der in den Figuren 3a) und b) dargestellten Ruheposition in die Arbeitsposition, die in den Figuren 3c) und d) dargestellt ist, wird somit über die Tastfläche 314 eine Vorspannung erzeugt, die den Schieber 322 nach dem Loslassen wieder in die Ruheposition zurückstellt. Während des Betriebs muß der Bediener nur die Rückstellkraft durch leichtes Drücken überwinden, während die Hauptkraft von der Verrastung aufgenommen wird, wenn die Rastfläche 316 in die Ausnehmung 320 eingeklinkt ist.

Zur Betätigung muß der Schieber 322 aus der Ruhestellung gemäß Fig. 3a) und b) um ca. zwei Millimeter verschoben werden, bis die Rastfläche 316 in die Ausnehmung 320 einrastet und gleichzeitig das zweite Ende 312 des Empfangsleiters 308 mit dem zweiten Ende 306 des Sendeleiters 302 ausgerichtet wird.

Gegenüber einer Ausführung als Druckschalter hat die Ausführung gemäß Fig. 3 den Vorteil, daß die Haltekraft zum Halten des Schalters während des Betriebs unabhängig von der Kraft zum Betätigen des Schalters ausgelegt werden kann. Daher besteht die Möglichkeit, die Einschaltkraft zur Sicherheit gegen unbeabsichtigtes Einschalten relativ hoch zu wählen und die Haltekraft gering zu halten, wodurch sich ein höherer Bedienungskomfort ergibt. Außerdem kann ein Elektrowerkzeug, das mit einem derartigen Schiebeschalter ausgestattet ist, beim Umgreifen des Gehäuses z.B. beim Transport nicht anlaufen, vielmehr ist ein bewußter Einschaltvorgang erforderlich.

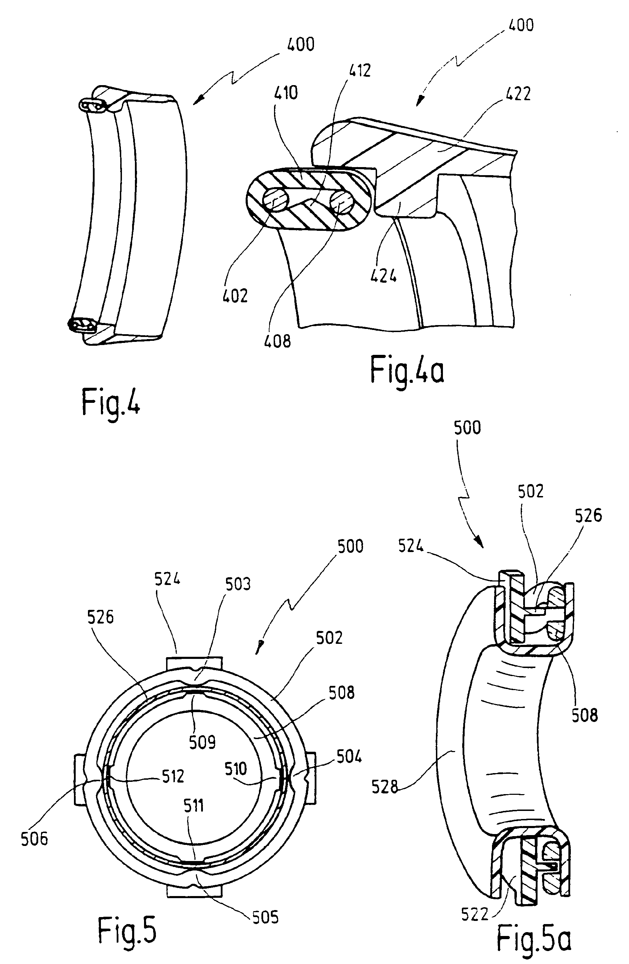

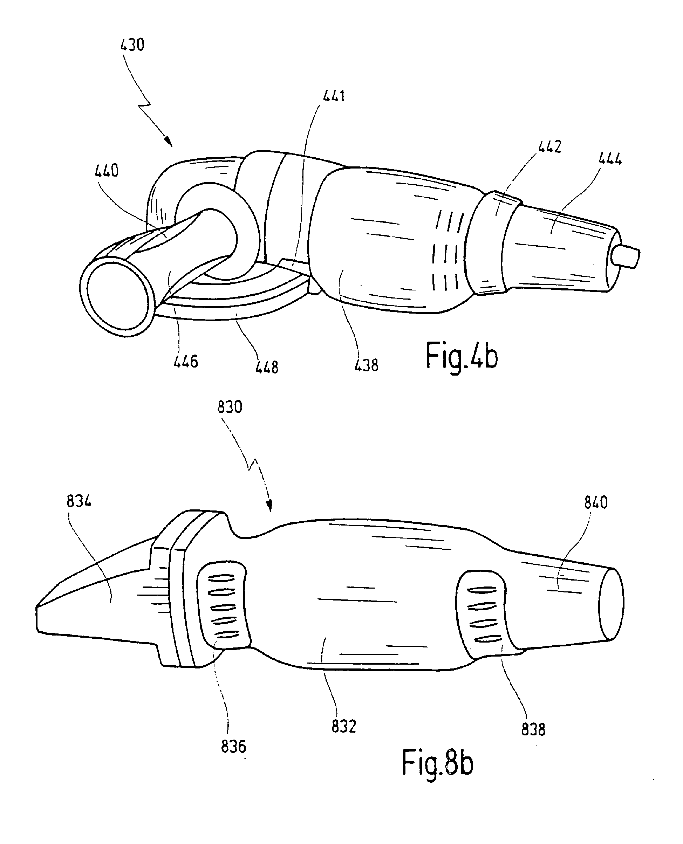

Zwei weitere Ausführungen der nicht von der Erfindung umfassten Kontrolleinrichtung, bei der es sich um einen Ringschalter handelt, werden im folgenden anhand der Figuren 4 und 5 erläutert.

Die Ausführung der insgesamt mit der Ziffer 400 bezeichneten Kontrolleinrichtung gemäß der Figuren 4 und 4a ist ein axialer Schiebeschalter, der durch Axialverschiebung des Kontrollorgans 422, das als Schaltring ausgebildet ist, schaltbar ist.

Ein ringförmiger Sendeleiter 402 und ein ringförmiger Empfangsleiter 408 sind voneinander beabstandet in einem ringförmigen Profilschlauch 410 aufgenommen, der bspw. aus Gummi oder einem anderen elastischen Material bestehen kann. Beide Lichtwellenleiter 402, 408 sind für eine radiale Abstrahlung bzw. eine radiale Einstrahlung ausgelegt.

In der in Fig. 4a gezeigten Ruheposition wird eine Lichteinstrahlung vom Sendeleiter 402 in den Empfangsleiter 408 durch einen dazwischen liegenden Vorsprung 412 des Profilschlauches 410 vermieden. Wird das Kontrollorgan 422 bzw. der Schaltring in Richtung auf den Profilschlauch 410 axial verschoben, so wird der Profilschlauch durch eine Ringschulter 424 des Kontrollorgans 422 zusammengepreßt, wodurch der Vorsprung 412 zur Seite gedrückt wird und beide Lichtwellenleiter 402, 408 miteinander in Kontakt gelangen, so daß Licht aus dem Sendeleiter 402 in den Empfangsleiter 408 übertritt.

Dabei kann außerdem für das Kontrollorgan 422 eine Verrastung vorgesehen sein, um das Kontrollorgan 422 mit geringer Haltekraft in der Arbeitsposition halten zu können. Beim Loslassen wird über die Vorspannung, die durch Ausbeulung des Profilschlauches 410 erzeugt wird, ein Rückstellen des Kontrollorgans 422 in die Ruheposition erreicht.

In Fig. 4b ist ein Elektrowerkzeug, das als Zweihand-Winkelschleifer ausgebildet ist, insgesamt mit der Ziffer 430 bezeichnet.

Das Elektrowerkzeug 430 weist einen axialen Schiebeschalter 442 auf, der gemäß den Figuren 4 bzw. 4a aufgebaut ist.

Das Elektrowerkzeug 430 wird mit einer Hand an einem hinteren Griffteil 444 am Ende des Gehäuses 438 ergriffen und mit der anderen Hand an einem Stielhandgriff 446 gehalten, der in der in Fig. 4b gezeigten Position an der linken Seite des Getriebekopfes befestigt sein kann.

Am Stielhandgriff 446 ist eine weitere Kontrolleinrichtung 440 vorgesehen, die bspw. gemäß Fig. 1 oder 2 aufgebaut sein kann. Die Kontrolleinrichtungen 440, 442 sind für einen Zweihandbetrieb ausgelegt, so daß das Elektrowerkzeug nur bei gleichzeitigem Ergreifen von Griffteil 444 und Stielhandgriff 446 aktiviert werden kann.

Bei dem hier dargestellten Zweihand-Winkelschleifer 430 ist ferner eine Haube 448 in Fig. 4b angedeutet. Der Haube 448 ist eine Kontrolleinrichtung 441 zugeordnet, durch die überwacht werden kann, ob die Haube vorhanden ist oder nicht, so daß ein Anlaufen des Elektrowerkzeugs 430 nur bei vorhandener Haube möglich ist. Hierbei kann ferner eine Codierung der Haube vorgesehen sein, um sicherzustellen, daß nur ein bestimmter Haubentyp für ein bestimmtes Elektrowerkzeug verwendet werden kann, während bei Anbau einer nicht geeigneten Haube ein Anlaufen des Elektrowerkzeuges nicht möglich ist.

Das Elektrowerkzeug 430 ist, wie vorstehend bereits erwähnt, für einen Zweihandbetrieb ausgelegt. Nur wenn der Ringschalter 442 betätigt wird, während gleichzeitig der Schalter 440 mit der anderen Hand am Stielhandgriff 446 betätigt wird, ist ein Anlaufen möglich. Durch den Ringschalter wird eine Schalterbetätigung in verschiedenen Griffpositionen ermöglicht, so daß auch bei unterschiedlichen Anwendungen, wie etwa Schruppen und Trennen eine Schalterbetätigung aus jeder Griffposition ermöglicht wird.

Eine weitere Ausführung einer nicht erfindungsgemäßen Kontrolleinrichtung mit ringförmigen Lichtleitern ist in den Figuren 5 und 5a dargestellt und insgesamt mit der Ziffer 500 bezeichnet.

Hierbei weist ein ringförmiger Sendeleiter 502 insgesamt vier definierte Lichtaustrittsstellen 503, 504, 505, 506 auf, die jeweils um 90° zueinander winkelmäßig versetzt sind, und denen entsprechende Lichteintrittsbereiche 509, 510, 511, 512 eines innen liegenden ringförmigen Empfangsleiters 508 zugeordnet sind.

Am ringförmigen Gehäuse 528 sind die Lichtwellenleiter 502, 508 aufgenommen, wie aus Fig. 5a zu ersehen ist. Das Kontrollorgan 522 ist als Ring ausgebildet, der vier seitlich hervorstehende Schaltflächen 524 aufweist, mittels derer eine vom Kontrollorgan 522 oder Schaltring hervorstehende Rippe 526 in den jeweiligen Zwischenraum zwischen den Lichtaustrittsbereichen 503, 504, 505, 506 bzw. den Lichteintrittsbereichen 509, 510, 511, 512 einschiebbar ist, um den Lichtübertritt zu verhindern.

Im oberen Teil von Fig. 5a ist die aktivierte Position oder Arbeitsposition des Schalters dargestellt, da sich die obere Schaltfläche 524 außerhalb des Übertrittsbereiches zwischen Sendeleiter 502 und Empfangsleiter 508 befindet.

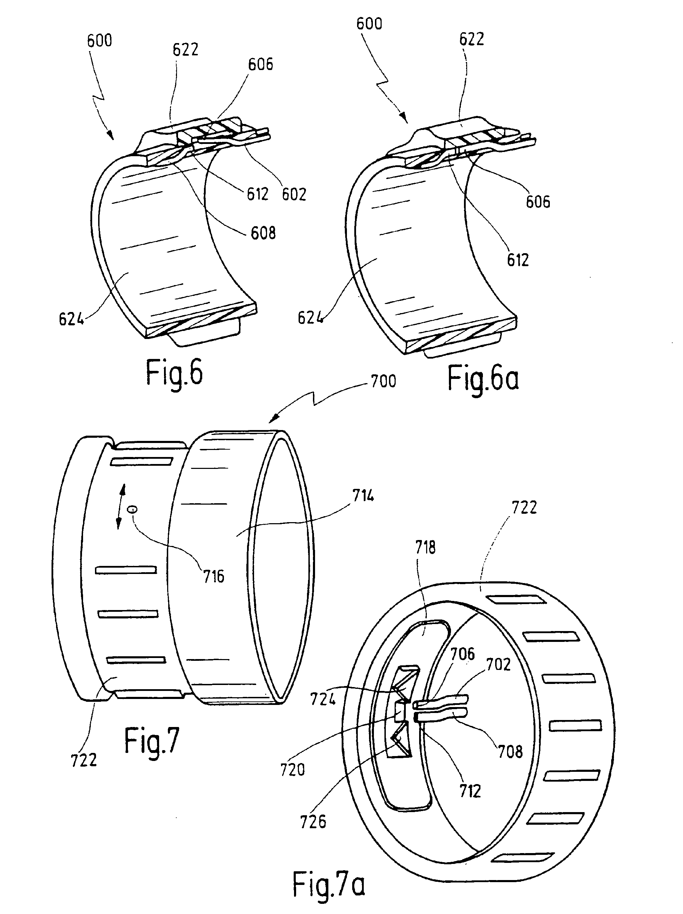

Weitere Ausführungen der Kontrolleinrichtung, bei denen es sich um Drehschalter handelt, werden im folgenden anhand der Figuren 6 bis 8 näher beschrieben.

In den Figuren 6 und 6a ist eine nicht erfindungsgemäße Kontrolleinrichtung insgesamt mit der Ziffer 600 bezeichnet. An einem ringförmigen Gehäuse 624 ist ein Kontrollorgan 622 aufgenommen, das als Schaltring ausgebildet ist, der durch Verdrehen betätigbar ist. In der Wand des Gehäuses 624 sind ein Sendeleiter 602 und ein Empfangsleiter 608 aufgenommen. Dabei ist das zweite Ende 606 des Sendeleiters 602 mittels des Kontrollorgans 622 zwischen einer nicht aktivierten Position gemäß Fig. 6, in der das zweite Ende 606 nicht mit dem zweiten Ende 612 des Empfangsleiters 608 fluchtet, und einer aktivierten Position oder Arbeitsposition bewegbar, in der beide zweiten Enden 606, 612 miteinander ausgerichtet sind. Der Schaltvorgang wird durch Verdrehen des Kontrollorgans 622 bewirkt, wodurch das zweite Ende 606 des Sendeleiters 602 zwischen den beiden in Fig. 6 und 6a gezeigten Positionen bewegt wird.

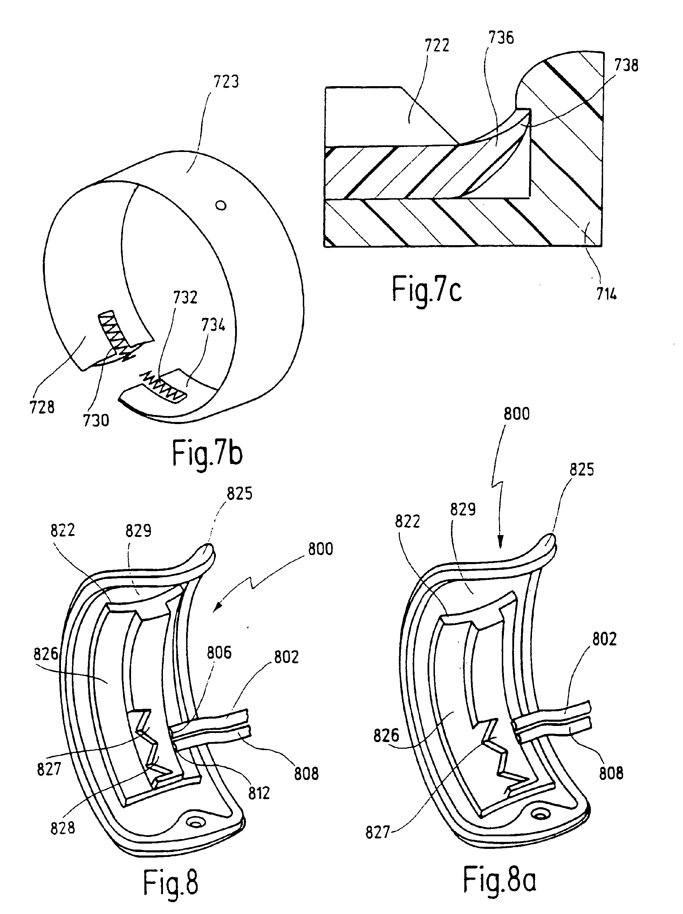

Eine weitere Ausführung einer nicht erfindungsgemäßen Kontrolleinrichtung ist in den Figuren 7 und 7a insgesamt mit der Ziffer 700 bezeichnet.

An einem ringförmigen Gehäuse 714 ist ein ringförmiges Kontrollorgan 722 aufgenommen, das zwischen einer mittleren Ruheposition und zwei Arbeitspositionen durch Verdrehen in die eine oder die andere Drehrichtung verdrehbar ist.

Die Ruheposition wird ferner optisch angezeigt, indem das Licht aus dem Sendeleiter 702 auf eine optische Anzeige 716 umgelenkt wird, so daß bspw. ein roter Punkt bei Einstecken des Netzsteckers der Maschine leuchtet. Der Schalter wird geschlossen, indem das Kontrollorgan 722 entweder im Uhrzeigersinn oder im Gegenuhrzeigersinn gedreht wird, wie im folgenden noch näher erläutert wird.

Gemäß Fig. 7a sind ein Sendeleiter 702 und ein Empfangsleiter 708 in nicht näher dargestellter Weise am Gehäuse 714 befestigt, so daß ihre zweiten Enden 706, 712 nebeneinander angeordnet sind, so daß kein Lichtübertritt dazwischen möglich ist.

Um einen Lichtübertritt zwischen den zweiten Enden 706, 712 zu ermöglichen, ist ein Umlenkelement erforderlich, das in eine geeignete Position vor die zweiten Enden 706, 712 bewegt werden muß, so daß aus dem Sendeleiter 702 austretendes Licht in den Empfangsleiter 708 umgelenkt wird.

Hierzu ist an der Innenseite des Kontrollorgans 722 ein Einsatz 718 aufgenommen, an dem nebeneinander ein erstes Prisma 724, gefolgt von einem Umlenkelement 720 und einem zweiten Prisma 726 aufgenommen sind.

Während das mittlere Umlenkelement 720 eine Umlenkung eines aus dem Sendeleiter 702 austretenden Lichtstrahls nach außen auf die optische Anzeige 716 erlaubt, sind die beiden Prismen 724, 726 derart ausgebildet und angeordnet, daß jeweils dann, wenn sich ein Prisma 724 oder 726 vor den zweiten Enden 706, 712 befindet, das aus dem Sendeleiter 702 austretende Licht in den Empfangsleiter 708 umgelenkt wird.

Somit wird in der mittleren in Fig. 7a dargestellten Ruheposition das aus dem Sendeleiter 702 austretende Licht nach außen auf die optische Anzeige 716 umgelenkt, um so die Bereitschaft der Kontrolleinrichtung bzw. einer damit gesteuerten Maschine bspw. eines Winkelschleifers, anzuzeigen. Wird das Kontrollorgan 722 aus der Ruheposition entweder im Uhrzeigersinn oder im Gegenuhrzeigersinn verdreht, bis eines der beiden Prismen 724, 726 vor die zweiten Enden 706, 712 gelangt und das Licht in den Empfangsleiter 708 umlenkt, so ist eine Aktivierungsposition oder Arbeitsposition erreicht, in der das Kontrollorgan 722 gehalten werden muß oder ggf. eingerastet werden kann. Wird das Kontrollorgan 722 losgelassen, so bewegt sich dieses aus jeder der Arbeitspositionen zurück in die Mittelstellung in die Ruheposition gemäß Fig. 7a.

Hierzu ist das Kontrollorgan 722 durch zwei Federelemente 730, 732, die in Fig. 7b beispielhaft angedeutet sind, in Richtung auf die Ruheposition vorgespannt.

Das Kontrollorgan 722 weist einen offenen Schaltring 723 gemäß Fig. 7b auf, der bei der Montage z.B. durch eine formschlüssige Metallklammer geschlossen wird. Er besteht bspw. aus einem bandförmigen Trägermaterial z.B. aus Metall, das eine Längung des Rings verhindert und wird mit einem elastischen Mantel mit mehreren Griffmulden und zwei seitlichen Rändern 736 umspritzt, die als Dichtlippen 738 ausgebildet sind, um den Schaltring vor Verschmutzung zu schützen (Fig. 7c).

In Fig. 7b ist der noch offene, nicht umspritzte Schaltring 723 dargestellt, an dessen beiden gegenüber liegenden Enden 728, 734 die zugehörigen Federelemente 730, 732 angedeutet sind.

Der Einsatz 718, an dem die beiden seitlichen Prismen 724, 726 und das mittlere Umlenkelement oder Umlenkprisma 720 aufgenommen sind, kann bspw. als transparentes Spritzgußteil aus PMMA hergestellt sein.

Eine weitere Abwandlung der Kontrolleinrichtung für ein erfindungsgemäßes Elektrowerkzeug ist in den Figuren 8 und 8a dargestellt und insgesamt mit der Ziffer 800 bezeichnet. Hierzu sind an einem nicht dargestellten Gehäuse wiederum ein Sendeleiter 802 und ein Empfangsleiter 808 mit ihren zweiten Enden 806, 812 nebeneinander angeordnet, so daß ein Lichtübertritt nur dann möglich ist, wenn ein aus dem Sendeleiter 802 austretender Lichtstrahl über ein Umlenkelement in den Empfangsleiter 808 umgelenkt wird.

Das Kontrollorgan 822 umfaßt eine Kappe 829 aus einem elastischen Material, wie etwa Gummi, die an einem umlaufenden Rand 825 fest mit einer nicht dargestellten Gehäuseöffnung verbunden wird. Innerhalb der Kappe ist ein Schieber 826 aufgenommen, an dem nebeneinander zwei Prismen 827, 828 vorgesehen sind.

Gemäß Fig. 8 befindet sich die Kontrolleinrichtung 800 in einer Ruheposition, in der aus dem Sendeleiter 802 austretendes Licht über das Prisma 827 seitlich abgelenkt wird und nicht in den Empfangsleiter 808 eintreten kann.

Aus dieser Ruheposition kann das Kontrollorgan 822 entweder in die eine Drehrichtung verschoben werden, so daß sich die Position gemäß Fig. 8a ergibt, in der über das Prisma 827 aus dem Sendeleiter 802 austretendes Licht in den Empfangsleiter 808 umgelenkt wird, oder in die umgekehrte Drehrichtung in eine zweite Arbeitsposition (nicht dargestellt) verschoben werden.

In der zweiten Arbeitsposition befindet sich das Prisma 828 vor den zweiten Enden 806, 812 um Licht aus dem Sendeleiter 802 in den Empfangsleiter 808 umzulenken.

Somit läßt sich auf einfache Weise eine Schalteinrichtung realisieren, mit einer mittleren Ruheposition und zwei seitlichen Arbeitspositionen, die aus der Ruheposition entweder durch Verdrehen in der einen Drehrichtung oder durch Verdrehen in der entgegengesetzten Drehrichtung erreichbar sind.

Dabei kann die Elastizität der z.B. aus Gummi bestehenden Kappe 829 zur Erzeugung einer Rückstellkraft genutzt werden, um eine Vorspannung des Kontrollorgans 822 etwa in die mittlere Ruheposition zu erzeugen.

In Fig. 8b ist ein Elektrowerkzeug, das mit zwei derartigen Kontrolleinrichtungen ausgestattet ist, insgesamt mit der Ziffer 830 bezeichnet. Es handelt sich wiederum um einen stark vereinfacht dargestellten Winkelschleifer, der entweder im Einhandbetrieb oder im Zweihandbetrieb betrieben werden kann.

Hierzu ist am vorderen Ende des Gehäuses 832 am Übergang zum Getriebekopf 834 ein erster Drehschalter 836 gemäß Fig. 8 vorgesehen, und am hinteren Ende des Gehäuses 832 an einem schlanken Griffteil 840 ein zweiter Drehschalter 838 vorgesehen. Der hintere Drehschalter 838 ist für den Zweihandbetrieb vorgesehen, wenn die Maschine am hinteren Griffteil 840 ergriffen wird und der Drehschalter 838 betätigt wird, während die Maschine gleichzeitig an einem Stielhandgriff (nicht dargestellt) mit der zweiten Hand gehalten wird, der seitlich links oder rechts in den Getriebekopf 834 eingeschraubt ist. Dagegen kann der Drehschalter 836 für den Einhandbetrieb verwendet werden. Hierzu kann an der gegenüber liegenden, in Fig. 8b nicht sichtbaren Seite noch ein weiterer Drehschalter vorgesehen sein, so daß die Maschine bequem sowohl von Links als auch von Rechts ergriffen werden und gleichzeitig eingeschaltet werden kann.

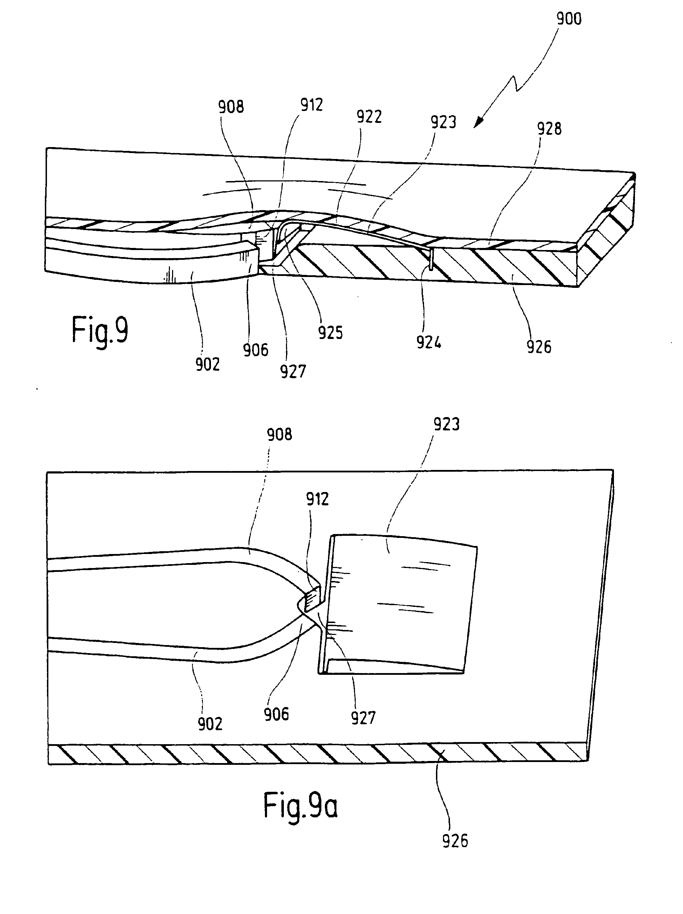

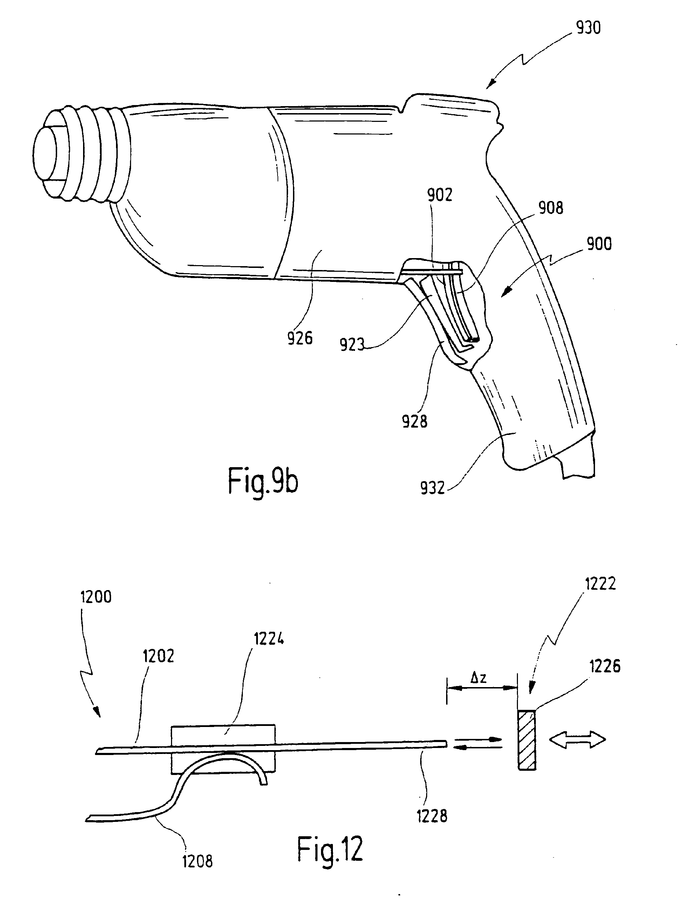

Eine weitere Abwandlung einer Kontrolleinrichtung für ein erfindungsgemäßes Elektrowerkzeug ist in den Figuren 9 und 9a dargestellt und insgesamt mit der Ziffer 900 bezeichnet.

Hierbei sind an einem Gehäuse 926 ein Sendeleiter 902 und ein Empfangsleiter 908 so aufgenommen, daß aus dem zweiten Ende 906 des Sendeleiters 902 austretendes Licht nur durch ein entsprechendes Umlenkelement in das zweite Ende 912 des Empfangsleiters gelangen kann.

Im Gegensatz zu den bei den vorstehenden Ausführungen verwendeten Umlenkprismen ist bei der Ausführung gemäß Fig. 9 ein Federelement 923 vorgesehen, das mit einem ersten Ende 924 fest im Gehäuse 926 eingespannt ist und mit seinem zweiten Ende 925 entgegen der Wirkung seiner Federspannung beweglich ist.

Im Gehäuse 926 ist eine Ausnehmung 927 vorgesehen, so daß das Federelement 923 mit seinem zweiten Ende 925 in eine Stellung gegenüber den zweiten Enden 906, 912 der Lichtwellenleiter 902, 908 bewegbar ist. Da das zweite Ende 925 verspiegelt ist, wozu das Federelement 923 bspw. aus poliertem Edelstahl bestehen kann, wird aus dem Sendeleiter 902 austretendes Licht in den Empfangsleiter 908 umgelenkt, wenn sich das zweite Ende 925 des Federelementes 923 gegenüber den zweiten Enden 906, 912 befindet.

Wie aus Fig. 9 näher zu ersehen ist, ist das Federelement 923 des Kontrollorgans 922 von einer Tastfläche 928 überdeckt, die vorzugsweise aus elastischem Material, etwa aus Gummi, bestehen kann und an der das Federelement 923 in seiner Ruheposition (keine Einkopplung von Lichtsignalen in den Empfangsleiter 908) gehalten wird. Wird die Tastfläche 928 im Bereich des Federelements 923 niedergedrückt, so bewegt sich das Federelement 923 in seine Arbeitsposition, so daß Licht aus dem Sendeleiter 902 in den Empfangsleiter 908 umgelenkt wird. Beim Loslassen bewegt sich das Federelement 923 unter Wirkung seiner Federkraft unter Wölbung der Tastfläche 928 nach außen.

Eine derartige Kontrolleinrichtung 900 ist vorteilhaft als Tasteinrichtung verwendbar, die etwa bei einem Elektrowerkzeug 930 gemäß Fig. 9b einsetzbar ist. Das Elektrowerkzeug 930 ist eine Bohrmaschine oder ein Schrauber in Pistolenform, bei dem zur Betätigung eine Kontrolleinrichtung 900 im Pistolenhandgriff 932 vorgesehen ist. Sofern dies gewünscht ist, kann die Intensität der in den Empfangsleiter 908 eingekoppelten Lichtsignale auch kontinuierlich ausgewertet werden, so daß die Kontrolleinrichtung 900 nicht nur als Schalter, sondern auch als Regler, etwa zur Drehzahlsteuerung des Elektrowerkzeugs 930 verwendet werden kann.

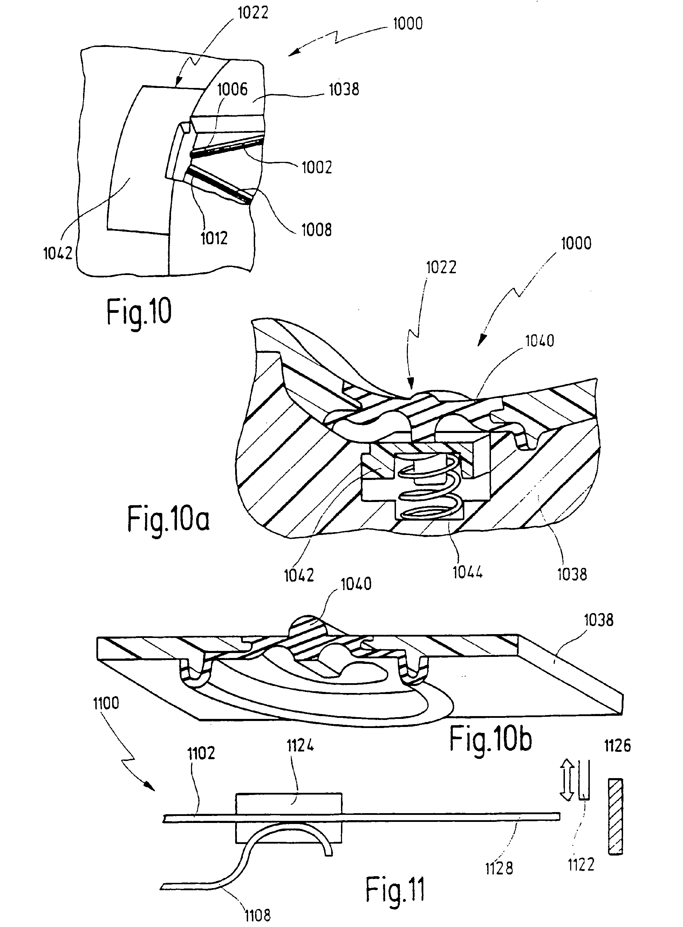

In den Figuren 10, 10a, 10b ist eine weitere Ausführung einer Kontrolleinrichtung für ein erfindungsgemäßes Elektrowerkzeug schematisch dargestellt und insgesamt mit der Ziffer 1000 bezeichnet.

Die Kontrolleinrichtung 1000 entspricht weitgehend der Kontrolleinrichtung 900 gemäß Fig. 9, da wiederum ein Sendeleiter 1002 und ein Empfangsleiter 1008 winklig zueinander derart angeordnet sind, daß normalerweise keine Übertragung von Lichtsignalen aus dem Sendeleiter 1002 in den Empfangsleiter 1008 möglich ist. Hierzu ist ein Umlenkelement notwendig, das in den Figuren 10 und 10a schematisch mit der Ziffer 1042 angedeutet ist. Dieses Umlenkelement 1042 kann eine verspiegelte Oberfläche aufweisen, jedoch reicht im vorliegenden Fall schon die Ausbildung der Oberfläche als weißes Kunststoffteil, da die Reflexion ausreicht, um ein Lichtsignal aus dem Sendeleiter 1002 in den Empfangsleiter 1008 einzukoppeln. Das Kontrollorgan 1022 zur Bewegung dieses Umlenkelementes 1042 kann, wie in Fig. 10a dargestellt, eine Tastfläche 1040 aufweisen, die mit einem Gehäuse 1038 über 2K-Spritztechnik verbunden ist und auf das darunterliegende Umlenkelement 1042 wirkt, um dieses entgegen der Wirkung eines Federelementes 1044 in eine Position bewegen zu können, in der Lichtsignale aus dem zweiten Ende 1006 des Sendeleiters 1002 in das zweite Ende 1012 des Empfangsleiters 1008 eingekoppelt werden.

Die Ausbildung der Tastfläche in 2K-Technik ist aus der vergrößerten Darstellung gemäß Fig. 10b besser erkennbar. Die 2K-Technik führt zu einer vollständig abgedichteten Tastfläche 1040, so daß das Kontrollelement 1000 gegen Umwelteinflüsse von außen (oder auch gegen Verschmutzung von innen) geschützt sein kann.

Eine weitere Ausführung einer nicht von der Erfindung umfassten Kontrolleinrichtung ist schematisch in der Fig. 11 dargestellt und insgesamt mit der Ziffer 1100 bezeichnet. In einen Sende-/Empfangsleiter 1102 werden von einer nicht dargestellten Lichtquelle Lichtsignale eingespeist, die aus dem Ende 1128 des Sende-/Empfangsleiters 1102 austreten und an einer zugeordneten Reflexionsfläche 1126 wieder in den Sende-/Empfangsleiter 1102 eingekoppelt werden. Eine Auswertung der zurückgesandten Lichtsignale kann unmittelbar am Sende-/Empfangsleiter 1102 erfolgen, oder auch in einem separaten Empfangsleiter 1108, der über einen Strahlteiler 1124 mit dem Sende-/Empfangsleiter 1102 verbunden wird und einen Teil der Lichtsignale auskoppelt. Im Bereich 1128 des Sende-/Empfangsleiters reicht somit ein einziger Lichtwellenleiter aus, um die notwendigen Lichtsignale zu übertragen und zur Auswerteeinrichtung zurückzukoppeln. Eine solche Ausführung kann unter besonders engen räumlichen Verhältnissen gewisse Vorteile aufweisen. Als Kontrollorgan 1122 kann bspw. ein Taster vorgesehen sein, der in den Raum zwischen 1128 und der Reflexionsfläche 1126 hinein bewegbar ist.

Sollte eine Reflexionsfläche 1126 aus konstruktiven Gründen an dem in der Zeichnung dargestellten Ort nicht möglich sein, kann auch das Kontrollorgan 1122 als Reflexionsfläche dienen.

Eine nicht erfindungsgemäße Abwandlung der Ausführung gemäß Fig. 11 ist in Fig. 12 dargestellt und insgesamt mit der Ziffer 1200 bezeichnet.

Hierbei wird in einen Sende-/Empfangsleiter 1202 ein frequenzmoduliertes Lichtsignal eingekoppelt, das über ein Ende 1228 des Sende-/Empfangsleiters 1202 austritt und an einer zugeordneten Reflexionsfläche 1226 reflektiert wird. Durch Veränderung des Abstandes zwischen dem Ende 1228 und der Reflexionsfläche 1226 ergibt sich eine Phasenverschiebung des in das Ende 1228 zurückgekoppelten Lichtsignals. Die Auswertung erfolgt vorzugsweise über einen Empfangsleiter 1208, der mittels eines Strahlteilers 1224 angeschlossen ist und dessen Ausgangssignal einer nicht dargestellten Auswerteschaltung zugeführt ist. Die Reflexionsfläche 1226 kann hierbei Teil des Kontrollorgans 1222 sein, das lediglich in bezug auf das Ende 1228 bewegt werden muß. Die Auswerteschaltung wertet die Wegdifferenz Δz aus.

Die vorstehend beschriebene Anordnung kann somit als Regler verwendet werden.

## Patentansprüche

1. Elektrowerkzeug mit einem Gehäuse (132; 138; 238; 318; 438; 926; 1038), mit einer Kontrolleinrichtung, insbesondere Schalteinrichtung, Regeleinrichtung oder Sensoreinrichtung, und mit einer elastischen Tastfläche zur Bedienung der Kontrolleinrichtung, und mit mindestens zwei Lichtwellenleiter (102, 108; 202, 208; 302, 308; 402, 408; 802, 808; 902, 908; 1002, 1008), von denen ein erster, als Sendeleiter (102; 202; 302; 402; 502; 602; 702; 802; 902; 1002) ausgebildeter Lichtwellenleiter mit einer Lichtquelle (120) verbunden ist, und dem ein zweiter, als Empfangsleiter (108; 208; 308; 408; 508; 608; 708; 808; 908; 1008) ausgebildeter Lichtwellenleiter zugeordnet ist, der mit einer Auswerteschaltung (114) verbunden ist, wobei den beiden Lichtwellenleitern (102, 108; 202, 208; 302, 308; 402, 408; 502, 508; 602, 608; 702, 708; 802, 808; 902, 908; 1002, 1008) ein Kontrollorgan der Kontrolleinrichtung (122; 222; 322; 422; 822; 922; 1022) zugeordnet ist, das zwischen mindestens zwei Positionen bewegbar ist, in denen unterschiedlich starke Lichtsignale vom Sendeleiter (102; 202; 302; 402; 502; 602; 702; 802; 902; 1002) in den Empfangsleiter (108; 208; 308; 408; 808; 908; 1008) eingekoppelt werden, **dadurch gekennzeichnet, daß** das Kontrollorgan (122; 222; 322; 422; 822; 922; 1022) von der elastischen Tastfläche (140, 144, 148; 242, 246; 314; 829; 922; 1040) überdeckt ist, und daß das Gehäuse (132; 138; 238; 318; 438; 926; 1038) mit der elastischen Tastfläche (140, 144, 148; 242, 246; 314; 829; 922; 1040) durch 2K-Technik verbunden ist.

2. Elektrowerkzeug nach Anspruch 1, **dadurch gekennzeichnet, dass** der Sendeleiter (102; 202; 302; 402; 802; 902; 1002) und Empfangsleiter (108; 208; 308; 408; 808; 908; 1008) zumindest im Bereich des Kontrollorgans (122; 222; 322; 422; 822; 922; 1022) in einer nach außen zumindest staubgeschützten Einheit aufgenommen sind.

3. Elektrowerkzeug nach Anspruch 1 oder 2, **dadurch gekennzeichnet, dass** der Sendeleiter (102; 202; 302; 802; 902; 1002) an einem ersten Ende mit (104) der Lichtquelle (120) verbunden ist und der Empfangsleiter (108; 208; 308; 808; 908; 1008) an einem ersten Ende (110) mit der Auswerteschaltung (114) verbunden ist, wobei ein zweites Ende (106; 206; 306; 806; 906) des Sendeleiters (102; 202; 302; 802; 902; 1002) von einem zweiten Ende (112; 212; 312; 812; 912) des Empfangsleiters (108; 208; 308; 808; 908; 1008) beabstandet angeordnet ist.

4. Elektrowerkzeug nach Anspruch 3, **dadurch gekennzeichnet, dass** das Kontrollorgan (122) als elastisches Formteil ausgebildet ist, das die zweiten Enden (106, 112) der Lichtwellenleiter umschließt.

5. Elektrowerkzeug nach Anspruch 4, **dadurch gekennzeichnet, dass** das elastische Formteil als Hülse ausgebildet ist, die im Bereich zwischen den zweiten Enden (106, 112) zur Unterbrechung von in den Empfangsleiter (112) eingekoppelten Lichtsignalen elastisch deformierbar ist.

6. Elektrowerkzeug nach Anspruch 5, **dadurch gekennzeichnet, dass** das elastische Formteil im Bereich zwischen den zweiten Enden (106, 112) eine elastisch deformierbare Verdickung (123) aufweist.

7. Elektrowerkzeug nach Anspruch 3, **dadurch gekennzeichnet, dass** die zweiten Enden (306, 312) der Lichtwellenleiter (302, 308) zur Übertragung eines Lichtsignals in den Empfangsleiter (608) miteinander ausgerichtet sind, und bei dem das Kontrollorgan (322) zur Relativbewegung der beiden Enden (306, 312) zueinander ausgebildet ist.

8. Elektrowerkzeug nach Anspruch 3, **dadurch gekennzeichnet, dass** die zweiten Enden (206, 212) der Lichtwellenleiter zur Einkopplung von Lichtsignalen in den Empfangsleiter (208) miteinander ausgerichtet sind, und das Kontrollorgan (222) einen in den Raum zwischen den beiden Enden (206, 212) hinein bewegbaren Abschnitt (215) umfaßt.

9. Elektrowerkzeug nach Anspruch 8, **dadurch gekennzeichnet, dass** das Kontrollorgan (222) als Federelement ausgebildet ist, in dessen in den Raum zwischen den zweiten Enden (206, 212) hinein bewegbaren Abschnitt (215) eine Lichtdurchlaßöffnung (214) vorgesehen ist.

10. Elektrowerkzeug nach einem der vorhergehenden Ansprüche, **dadurch gekennzeichnet, dass** die Kontrolleinrichtung als Schalt- oder als Tasteinrichtung ausgebildet ist.

11. Elektrowerkzeug nach Anspruch 3, **dadurch gekennzeichnet, dass** die beiden Lichtwellenleiter an ihren zweiten Enden (306, 312) zwischen einer Position, in der beide zweiten Enden (306, 312) miteinander ausgerichtet sind, und einer Position, in der beide zweiten Enden (306, 312) nicht miteinander ausgerichtet sind, bewegbar sind.

12. Elektrowerkzeug nach Anspruch 11, bei der das Kontrollorgan (322) als Schieber ausgebildet ist, der zwischen einer Ruheposition, in der die zweiten Enden (306, 312) der Lichtwellenleiter (302, 308) nicht miteinander fluchten, und einer Arbeitsposition, in der die zweiten Enden (306, 312) zur Einkopplung von Lichtsignalen in den Empfangsleiter (308) miteinander ausgerichtet sind, verschiebbar ist.

13. Elektrowerkzeug nach Anspruch 12, **dadurch gekennzeichnet, dass** der Schieber (322) in der Arbeitsposition verrastbar ist und in Richtung auf die Ruheposition vorgespannt ist.

14. Elektrowerkzeug nach Anspruch 11, 12 oder 13, **dadurch gekennzeichnet, dass** eines der zweiten Enden (306, 312) durch ein Federelement oder durch seine Eigenspannung in einer Richtung etwa quer zu seiner Erstreckungsrichtung vorgespannt ist und das Kontrollorgan (322) eine seitliche Bewegung des zweiten Endes zwischen Ruheposition und Arbeitsposition erlaubt.

15. Elektrowerkzeug nach Anspruch 13 oder 14, **dadurch gekennzeichnet, dass** der Schieber (322) von der elastischen Tastfläche (314) überdeckt ist, mit der er fest verbunden ist und durch die Materialspannung der Tastfläche (314) in Richtung auf die Ruheposition oder umgekehrt elastisch vorgespannt ist.

16. Elektrowerkzeug nach Anspruch 3, **dadurch gekennzeichnet, dass** die zweiten Enden (306, 312; 806, 812; 906, 912) der Lichtwellenleiter nicht miteinander ausgerichtet sind, und dass das Kontrollorgan (822; 922) Mittel (827, 828; 923, 925) zur Einkopplung der vom Sendeleiter (802; 902) ausgesandten Lichtsignale zumindest in einer der Positionen des Kontrollorgans (822; 922) in den Empfangsleiter (808; 908) aufweist.

17. Elektrowerkzeug nach Anspruch 16, **dadurch gekennzeichnet, dass** die Mittel zur Einkopplung ein Umlenkelement, vorzugsweise ein Prisma oder eine Reflexionsfläche (827, 828) aufweisen, die in eine Position zur Übertragung von Lichtsignalen vom Sendeleiter (802; 902) auf den Empfangsleiter (808; 908) bewegbar ist.

18. Elektrowerkzeug nach einem der Ansprüche 16 oder 17, **dadurch gekennzeichnet, dass** das Kontrollorgan (822) einen Drehschieber umfaßt, an dem die Mittel zur Einkopplung und/oder das Umlenkelement aufgenommen sind.

19. Elektrowerkzeug nach Anspruch 18, **dadurch gekennzeichnet, dass** der Drehschieber als Schaltring (822) ausgebildet ist, der in Richtung auf eine Ruheposition vorgespannt ist.

20. Elektrowerkzeug nach Anspruch 18 oder 19, **dadurch gekennzeichnet, dass** der Drehschieber eine elastische Tastfläche (829) aufweist, die umfangsseitig an einer Gehäuseöffnung aufgenommen ist, wobei die Mittel (827, 828) zur Einkopplung der Lichtstrahlen in den Empfangsleiter und/oder die Umlenkmittel an der elastischen Tastfläche (829) aufgenommen sind.

21. Elektrowerkzeug nach Anspruch 20, **dadurch gekennzeichnet, dass** das Kontrollorgan (822) durch die Elastizität der Tastfläche (829) in Richtung auf eine Ruheposition elastisch vorgespannt ist, oder umgekehrt.

22. Elektrowerkzeug nach Anspruch 20 oder 21, **dadurch gekennzeichnet, dass** die Mittel zur Einkopplung ein Spiegelelement aufweisen, das in eine Position zur Übertragung von Lichtsignalen vom Sendeleiter (902) auf den Empfangsleiter (908) bewegbar ist.

23. Elektrowerkzeug nach Anspruch 22, **dadurch gekennzeichnet, dass** das Spiegelelement ein Federelement (923) aufweist, das an einem Ende (924) eingespannt ist und an dessen anderem Ende (925) eine Spiegelfläche aufgenommen ist, die entgegen der Wirkung der Federkraft bewegbar ist.

24. Elektrowerkzeug nach Anspruch 23, **dadurch gekennzeichnet, dass** die Spiegelfläche zwischen einer Position, in der keine Lichtsignale in den Empfangsleiter (908) eingekoppelt werden, und einer Position, in der aus dem Sendeleiter (902) austretendes Licht weitgehend vollständig in dem Empfangsleiter (908) eingekoppelt wird, kontinuierlich verschwenkbar ist.

25. Elektrowerkzeug nach Anspruch 23 oder 24, **dadurch gekennzeichnet, dass** das Federelement (923) an der Tastfläche (928) anliegt, mittels derer das Federelement (923) betätigbar ist.

26. Elektrowerkzeug nach einem der vorhergehenden Ansprüche, **gekennzeichnet durch** ein Betätigungs- oder Anbauteil (134; 446, 448), dem eine Kontrolleinrichtung (100; 440, 441) nach einem der vorhergehenden Ansprüche zugeordnet ist.

27. Elektrowerkzeug nach Anspruch 26, **gekennzeichnet durch** einen Spannhebel (134) zum Spannen eines Werkzeuges, der zwischen einer Spannposition und einer Löseposition bewegbar ist, und mit einer dem Spannhebel (134) zugeordneten Kontrolleinrichtung (100) zur Kontrolle der Spannposition des Spannhebels (134).

28. Elektrowerkzeug nach Anspruch 27, **dadurch gekennzeichnet, dass** die Kontrolleinrichtung (100) als Schalter ausgebildet ist, der eine Motorbetätigung nur bei in der Spannposition befindlichem Spannhebel (134) erlaubt.

29. Elektrowerkzeug nach einem der vorhergehenden Ansprüche, **dadurch gekennzeichnet, dass** mindestens einer der Lichtwellenleiter in die Gehäusewandung integriert ist.

## Claims

1. An electric power tool comprising a housing (132; 138; 238; 318; 438; 926; 1038) and a control device, in particular a switching device, regulation device or sensor device, further comprising an elastic touch pad for operating the control device, and further comprising at least two optical waveguides (102, 108; 202, 208; 302, 308; 402, 408; 802, 808; 902, 908; 1002, 1008), at least a first one of which being configured as a transmitting optical waveguide (102; 202; 302; 402; 502; 602; 702; 802; 902; 1002) is coupled to a light source (120) and cooperates with a second optical waveguide being configured as a receiving waveguide (108; 208; 308; 408; 508; 608; 708; 808; 908; 1008) that is coupled with an evaluation circuitry (114), wherein the two optical waveguides (102, 108; 202, 208; 302, 308; 402, 408; 502, 508; 602, 608; 702, 708; 802, 808; 902, 908; 1002, 1008) are coupled to a control element (122; 222; 322; 422; 822; 922; 1022) of the control device that is movable between at least two positions within which light signals of different magnitudes are input from the transmitting waveguide (102; 202; 302; 402; 502; 602; 702; 802; 902; 1002) into the receiving waveguide (108; 208; 308; 408; 808; 908; 1008), **characterized in that** the control element (122; 222; 322; 822; 922; 1022) is covered by the elastic touch pad (140; 144; 148; 242; 246; 314; 829; 922; 1040), and **in that** the housing (132; 138; 238; 318; 438; 926; 1038) is connected with the elastic touch pad (140; 144; 148; 242; 246; 314; 829; 922; 1040) by means of two-component-technology.

2. The electric power tool of claim 1, **characterized in that** the transmitting waveguide (102; 202; 302; 402; 802; 902; 1002) and the receiving waveguide (108; 208; 308; 408; 808; 908; 1008) at least in the region of the control element (122; 222; 322; 422; 822; 922; 1022) are received in a unit protected against the outside at least against dust.

3. The electric power tool of claim 1 or 2, **characterized in that** the transmitting waveguide (102; 202; 302; 802; 902; 1002) at a first end (104) thereof is coupled with the light source (120), and the receiving waveguide (108; 208; 308; 808; 908; 1008) at a first end (110) thereof is coupled with the evaluation circuitry (114), wherein a second end (106; 206; 306; 806; 906) of the transmitting waveguide (102; 202; 302; 802; 902; 1002) is arranged at a distance from a second end (112; 212; 312; 812; 912) of the receiving waveguide (108; 208; 308; 808; 908; 1008).

4. The electric power tool of claim 3, **characterized in that** the control element (122) is configured as an elastic form part surrounding the second ends (106, 112) of the optical waveguides.

5. The electric power tool of claim 4, **characterized in that** the elastic form part is configured as a sleeve that is elastically deformable in the region between the second ends (106, 112) for blocking the light signals input into the receiving waveguide (112).

6. The electric power tool of claim 5, **characterized in that** the elastic form part comprises a thickening (123) that is arranged between the second ends (106, 112) and is elastically deformable.

7. The electric power tool of claim 3, **characterized in that** the second ends (306, 312) of the optical waveguides (302, 808) are aligned with each other for transmitting a light signal into the receiving waveguide (608), and wherein the control element (322) is configured for moving the second ends (306, 312) relative to each other.

8. The electric power tool of claim 3, **characterized in that** the second ends (206, 212) of the optical waveguides are aligned with each other for inputting light signals into the receiving waveguide (208), and wherein the control element (222) comprises a portion (215) that is movable into the space between the two ends (206, 212).

9. The electric power tool of claim 8, **characterized in that** the control element (222) is configured as a spring element, the portion (215) of which that is movable into the space between the second ends (206, 212) comprises a light passing opening (214).

10. The electric power tool of any one of the preceding claims, **characterized in that** the control device is configured as a switching device or a non-locking key device.

11. The electric power tool of claim 3, **characterized in that** both optical waveguides are movable between a position in which both second ends (306, 312) are aligned with each other, and between a position in which both second ends (306, 312) are not aligned with each other.

12. The electric power tool of claim 12, **characterized in that** the control element (322) is configured as a slider which is slidable between an idle position in which the second ends (306, 312) of the optical waveguides (302, 308) are not aligned with each other, and between an operative position in which the second ends (306, 312) are aligned with each other for transmitting light signals into the receiving waveguide (308).

13. The electric power tool of claim 12, **characterized in that** the slider (322) is lockable in the operative position and is biased toward the idle position.

14. The electric power tool of any of claims 11, 12 or 13, **characterized in that** one of the second ends (306, 312) is biased by a spring element or by its self-tension into a direction substantially transversely to its direction of extension, and wherein the control element allows to move the second end laterally between the idle position and the operative position.

15. The electric power tool of claim 13 or 14, **characterized in that** the slider (322) is covered by the elastic touch pad (314) to which it is firmly connected and by which it is elastically biased into the idle position or vice versa by the material tension of the touch pad (314).

16. The electric power tool of claim 3, **characterized in that** the second ends (306, 312; 806, 812; 906, 912; 1006, 1012) of the optical waveguides are not aligned with each other, and wherein the control element (822; 922) comprises means (827, 828; 923, 925) for inputting the light signals emitted by the transmitting waveguide (802; 902) into the receiving waveguide (808; 908) in at least one of the positions of the control element (822; 922).

17. The electric power tool of claim 16, **characterized in that** the means for inputting comprises a redirecting means, preferably a prism or a reflecting surface (827, 828), which is movable into a position for transmitting light signals from the transmitting waveguide (802; 902) into the receiving waveguide (808; 908).

18. The electric power tool of any one of claims 16 or 17, **characterized in that** the control element (822) comprises a rotary slide upon which the means for inputting and/or the means for redirecting is received.

19. The electric power tool of claim 18, **characterized in that** the rotary slide is configured as a switching ring (822) which biased into the direction of an idle position.

20. The electric power tool of any one of claims 18 or 19, **characterized in that** the rotary slide comprises an elastic touch pad (829) that is received circumferentially in a housing opening, wherein the means (827, 828) for inputting the light rays into the receiving waveguide and/or the redirecting means are received on the elastic touch pad (829).

21. The electric power tool of claim 20, **characterized in that** the control element (822) is biased elastically by the elasticity of the touch pad (829) into the direction of an idle position or vice versa.

22. The electric power tool of claim 20 or 21, **characterized in that** the means for inputting comprises a mirror element that is movable into a position for transmitting light signals from the transmitting waveguide (902) to the receiving waveguide (908).

23. The electric power tool of claim 22, **characterized in that** the mirror element comprises a spring element (923) which is clamped at one end (924) and which receives a mirror surface at the other end (925) movably against the action of the spring force.

24. The electric power tool of claim 23, **characterized in that** the mirror surface is pivotable continuously between a position in which no light signals are input into the receiving waveguide, and between a position in which light emerging from the transmitting waveguide (902) is input almost completely into the receiving waveguide (908).

25. The electric power tool of claim 23 or 24, **characterized in that** the spring element (923) rests against a touch pad (928) by means of which the spring element (923) is activatable.

26. The electric power tool of any of the preceding claims, **characterized by** an activation part or an attachment part (134; 446, 448) that is coupled to a control device (100; 440; 441) of any one of the preceding claims.

27. The electric power tool of claim 26, **characterized by** a clamping lever (134) for clamping a tool, which is movable between a clamping position and a loose position, and further comprising an associated control device for controlling the position of the clamping lever (134).

28. The electric power tool of claim 27, **characterized in that** the control device (100) is configured as a switch allowing an activation of the motor only when the clamping lever (134) is in the clamping position.

29. The electric power tool of any one of the preceding claims, **characterized in that** at least one of the optical waveguides is integrated into the housing wall.

## Revendications

1. Outil électrique doté d'un boîtier (132; 138; 238; 318; 438; 926; 1038), d'un dispositif de contrôle, en particulier d'un dispositif de commutation, d'un dispositif de régulation ou d'un dispositif de détection ainsi que d'une surface élastique de touche qui commande le dispositif de contrôle et que d'au moins deux conducteurs (102, 108; 202, 208; 302, 308; 402, 408; 802, 808; 902, 908; 1002, 1008) d'ondes lumineuses, parmi lesquels un premier conducteur d'ondes lumineuses configuré comme conducteur d'émission (102; 202; 302; 402; 502; 602; 702; 802; 902; 1002) est relié à une source (120) de lumière et un deuxième conducteur d'ondes lumineuses configuré comme conducteur de réception (108; 208; 308; 408; 508; 608; 708; 808; 908; 1008) est associé audit premier conducteur et est relié à un circuit d'évaluation (114),
un organe de contrôle (122; 222; 322; 422; 822; 922; 1022) du dispositif de contrôle étant associé aux deux conducteurs (102, 108; 202, 208; 302, 308; 402, 408; 502, 508; 602, 608; 702, 708; 802, 808; 902, 908; 1002, 1008) d'ondes lumineuses et pouvant être déplacé entre au moins deux positions dans lesquelles des signaux lumineux de forces différentes provenant du conducteur d'émission (102; 202; 302; 402; 502; 602; 702; 802; 902; 1002) peuvent être injectés dans le conducteur de réception (108; 208; 308; 408; 808; 908; 1008),
**caractérisé en ce que**
l'organe de contrôle (122; 222; 322; 422; 822; 922; 1022) est recouvert par la surface élastique de touche (140, 144, 148; 242, 246; 314; 829; 922; 1040) et
**en ce que** le boîtier (132; 138; 238; 318; 438; 926; 1038) est relié à la surface élastique de touche (140, 144, 148; 242, 246; 314; 829; 922; 1040) par une technique à deux composants.

2. Outil électrique selon la revendication 1, **caractérisé en ce qu'**au moins au niveau de l'organe de contrôle (122; 222; 322; 422; 822; 922; 1022), le conducteur d'émission (102; 202; 302; 402; 802; 902; 1002) et le conducteur de réception (108; 208; 308; 408; 808; 908; 1008) sont repris dans une unité protégée au moins contre la poussière provenant de l'extérieur.

3. Outil électrique selon les revendications 1 ou 2, **caractérisé en ce que** le conducteur d'émission (102; 202; 302; 802; 902; 1002) est relié à la source (120) de lumière à une première extrémité (104) et **en ce que** le conducteur de réception (108; 208; 308; 808; 908; 1008) est relié au circuit d'évaluation (114) à une première extrémité (110), une deuxième extrémité (106; 206; 306; 806; 906) du conducteur d'émission (102; 202; 302; 802; 902; 1002) étant disposée à distance d'une deuxième extrémité (112; 212; 312; 812; 912) du conducteur de réception (108; 208; 308; 808; 908; 1008).

4. Outil électrique selon la revendication 3, **caractérisé en ce que** l'organe de contrôle (122) est configuré comme pièce élastique moulée qui englobe la deuxième extrémité (106, 112) du conducteur d'ondes lumineuses.

5. Outil électrique selon la revendication 4, **caractérisé en ce que** la pièce élastique moulée est configurée comme manchon qui peut être déformé élastiquement dans sa partie située entre les deuxièmes extrémités (106, 112) pour interrompre les signaux lumineux injectés dans le conducteur de réception (112).

6. Outil électrique selon la revendication 5, **caractérisé en ce que** la pièce élastique moulée présente un épaississement élastiquement déformable (123) dans sa partie située entre les deuxièmes extrémités (106, 112).

7. Outil électrique selon la revendication 3, **caractérisé en ce que** les deuxièmes extrémités (306, 312) des conducteurs (302, 308) d'ondes lumineuses sont alignées l'une sur l'autre pour transférer un signal lumineux dans le conducteur de réception (608) et dans lequel l'organe de contrôle (322) est configuré pour permettre un déplacement relatif entre les deux extrémités (306, 312).

8. Outil électrique selon la revendication 3, **caractérisé en ce que** les deuxièmes extrémités (206, 212) des conducteurs d'ondes lumineuses sont alignées l'une sur l'autre pour permettre d'injecter des signaux lumineux dans le conducteur de réception (208) et **en ce que** l'organe de contrôle (222) comporte une partie (215) qui peut être introduite dans l'espace situé entre les deux extrémités (206, 212).

9. Outil électrique selon la revendication 8, **caractérisé en ce que** l'organe de contrôle (222) est configuré comme élément élastique doté d'une ouverture (214) de passage de lumière dans la partie (215) apte à être insérée dans l'espace situé entre les deuxièmes extrémités (206, 212).

10. Outil électrique selon l'une des revendications précédentes, **caractérisé en ce que** le dispositif de contrôle est configuré comme dispositif de commutation ou dispositif à touche.

11. Outil électrique selon la revendication 3, **caractérisé en ce que** les deux conducteurs d'ondes lumineuses peuvent être déplacés en leurs deuxièmes extrémités (306, 312) entre une position dans laquelle les deux deuxièmes extrémités (306, 312) sont alignées l'une sur l'autre et une position dans laquelle les deux deuxièmes extrémités (306, 312) ne sont pas alignées l'une sur l'autre.

12. Outil électrique selon la revendication 11, dans lequel l'organe de contrôle (322) est configuré comme coulisseau qui peut être déplacé entre une position de repos dans laquelle les deuxièmes extrémités (306, 312) des conducteurs (302, 308) d'ondes lumineuses ne sont pas alignées l'une sur l'autre et une position de travail dans laquelle les deuxièmes extrémités (306, 312) sont alignées l'une sur l'autre pour permettre l'injection de signaux lumineux dans le conducteur de réception (308).

13. Outil électrique selon la revendication 12, **caractérisé en ce que** le coulisseau (322) peut être encliqueté dans sa position de travail et est précontraint en direction de sa position de repos.

14. Outil électrique selon les revendications 11, 12 ou 13, **caractérisé en ce que** l'une des deuxièmes extrémités (306, 312) est précontrainte par un élément élastique ou par sa contrainte propre dans une direction sensiblement transversale à la direction de son extension et **en ce que** l'organe de contrôle (322) permet un déplacement latéral de la deuxième extrémité entre sa position de repos et sa position de travail.

15. Outil électrique selon les revendications 13 ou 14, **caractérisé en ce que** le coulisseau (322) est recouvert par la surface élastique de touche (314) à laquelle il est relié solidairement et est précontraint élastiquement en direction de sa position de repos ou dans la direction opposée par la contrainte du matériau de la surface de touche (314).

16. Outil électrique selon la revendication 3, **caractérisé en ce que** les deuxièmes extrémités (306, 312; 806, 812; 906, 912) des conducteurs d'ondes lumineuses ne sont pas alignées l'une sur l'autre et **en ce que** l'organe de contrôle (822; 922) présente des moyens (827, 828; 923, 925) qui permettent d'injecter les signaux lumineux émis par le conducteur d'émission (802; 902) dans le conducteur de réception (808; 908) au moins dans l'une des positions de l'organe de contrôle (822; 922).

17. Outil électrique selon la revendication 16, **caractérisé en ce que** les moyens d'injection présentent un élément de déviation, de préférence un prisme ou une surface réfléchissante (827, 828) qui peut être déplacé dans une position de transfert des signaux lumineux depuis le conducteur d'émission (802; 902) jusque dans le conducteur de réception (808; 908).

18. Outil électrique selon l'une des revendications 16 ou 17, **caractérisé en ce que** l'organe de contrôle (822) comporte un bouton rotatif sur lequel sont repris les moyens d'injection et/ou l'élément de déviation.

19. Outil électrique selon la revendication 18, **caractérisé en ce que** le coulisseau rotatif est configuré comme bague de commutation (822) précontrainte en direction d'une position de repos.

20. Outil électrique selon les revendications 18 ou 19, **caractérisé en ce que** le coulisseau rotatif présente une surface élastique de touche (829) dont la périphérie est reprise dans une ouverture du boîtier, les moyens (827, 828) d'injection des rayons lumineux dans le conducteur de réception et/ou les moyens de déviation étant repris sur la surface élastique de touche (829).

21. Outil électrique selon la revendication 20, **caractérisé en ce que** l'organe de contrôle (822) est précontraint élastiquement en direction d'une position de repos ou dans une direction opposée par l'élasticité de la surface de touche (829).

22. Outil électrique selon les revendications 20 ou 21, **caractérisé en ce que** les moyens d'injection présentent un élément à miroir qui peut être déplacé dans une position qui permet le transfert de signaux lumineux depuis le conducteur d'émission (902) jusque dans le conducteur de réception (908).

23. Outil électrique selon la revendication 22, **caractérisé en ce que** l'élément en miroir présente un élément élastique (923) serré à une extrémité (924) et à l'autre extrémité (925) duquel est reprise une surface réfléchissante qui peut être déplacée en opposition à l'action de la force élastique.

24. Outil électrique selon la revendication 23, **caractérisé en ce que** la surface réfléchissante peut pivoter de manière continue entre une position dans laquelle aucun signal lumineux n'est injecté dans le conducteur de réception (908) et une position dans laquelle la lumière qui sort du conducteur d'émission (902) est injectée de manière essentiellement complète dans le conducteur de réception (908).

25. Outil électrique selon les revendications 23 ou 24, **caractérisé en ce que** l'élément élastique (923) repose sur la surface de touche (928) au moyen de laquelle l'élément élastique (923) peut être actionné.

26. Outil électrique selon l'une des revendications précédentes, **caractérisé par** un composant d'actionnement ou de montage (134; 446, 448) auquel est associé un dispositif de contrôle (100; 440, 441) selon l'une des revendications précédentes.

27. Outil électrique selon la revendication 26, **caractérisé par** un levier de serrage (134) qui serre un outil qui peut être déplacé entre une position de serrage et une position de libération et par un dispositif de contrôle (100) associé au levier de serrage (134) et destiné à contrôler la position de serrage du levier de serrage (134).

28. Outil électrique selon la revendication 27, **caractérisé en ce que** le dispositif de contrôle (100) est configuré comme commutateur qui permet d'actionner un moteur uniquement lorsque le levier de serrage (134) est situé dans sa position de serrage.

29. Outil électrique selon l'une des revendications précédentes, **caractérisé en ce qu'**au moins l'un des conducteurs d'ondes lumineuses est intégré dans la paroi du boîtier.
